# EUROPEAN PATENT APPLICATION

(11) **EP 4 513 933 A1**
(43) Date of publication of application: **26.02.2025**
(21) Application number: 23791311.6
(22) Date of filing: 20.04.2023
(51) Int. Cl.: H04W 16/10

(54) **INFORMATION PROCESSING METHOD, NETWORK-SIDE DEVICE, AND TERMINAL**

(30) Priority: 20.04.2022 CN 202210421054
(71) Applicant: Datang Mobile Communications Equipment Co., Ltd., Beijing 100085 (CN)
(72) Inventor: WANG, Jiaqing, Beijing 100085 (CN); CHENG, Fangchen, Beijing 100085 (CN); GAO, Qiubin, Beijing 100085 (CN); SUN, Shaohui, Beijing 100085 (CN)
(74) Representative: Maiwald GmbH
(86) International application number: PCT/CN2023/089451
(87) International publication number: WO 2023/202658

(57) **Abstract**

An information processing method, a network side device, and a terminal are provided, which relate to the field of communication technology. The method includes: obtaining, by a network side device, first information; determining, by the network side device, a virtual cell or a target Transmission Reception Point (TRP) set serving a target terminal based on the first information.

## Description

### CROSS-REFERENCE TO RELATED APPLICATION

The present application claims a priority to the Chinese patent application No. 202210421054.X filed in China on April 20, 2022, a disclosure of which is incorporated herein by reference in its entirety.

### TECHNICAL FIELD

The present disclosure relates to the field of communications technology, and in particular, to an information processing method, a network side device and a terminal.

### BACKGROUND

The 6th Generation (6G) Mobile Communication system needs to support a more flexible cell transmission solution, such as a plug-and-play cell or a mobile cell, whose coverage overlaps with other cells and the overlapping may even be time-varying. In such cases, it is often difficult to use a pre-planned cell transmission resource and coverage area. Additionally, scenarios such as the Industrial Internet of Things (IIoT), the Metaverse, and the vehicle wireless communication technology (vehicle to X, V2X) may involve a large number of access points (including a base station and a terminal) and require support for a high mobility speed and high throughput data transmission, with low latency and high reliability. For terminals at the edge of the cell or undergoing cell handover in these scenarios, the known 5G communication mechanism are unable to support flexible cell coverage and dynamic frequency reuse, making it challenging to simultaneously achieve high mobility and high throughput transmission with low latency and high reliability.

### SUMMARY

The present disclosure provides an information processing method, a network side device and a terminal, to solve the problem that a known communication mechanism cannot support flexible and dynamic cell coverage.

An embodiment of the present disclosure provides an information processing method, including:
obtaining, by a network side device, first information;
determining, by the network side device, a virtual cell or a target Transmission Reception Point (TRP) set serving a target terminal based on the first information.

Optionally, the target TRP set is a dedicated TRP set of the target terminal, or the target TRP set is determined by the network side device in a semi-static or dynamic manner;
the virtual cell is determined by the dedicated TRP set of the target terminal; or the virtual cell is determined by a TRP set determined by the network side device in the semi-static or dynamic manner.

Optionally, the obtaining, by the network side device, the first information, including:
receiving, by the network side device, a reference signal sent by the target terminal, wherein the first information is carried by the reference signal; the first information includes: unique identifier information of the target terminal and/or an access request sequence;
the determining, by the network side device, the virtual cell or the target TRP set serving the target terminal based on the first information, including:
   determining, by the network side device, the virtual cell or the target TRP set serving the target terminal when the network side device detects the access request sequence carried by the reference signal; and/or
   determining, by the network side device, the virtual cell or the target TRP set serving the target terminal when the network side device detects the unique identifier information of the target terminal carried by the reference signal.

Optionally, the reference signal is generated by a unique sequence; the unique sequence is associated with the unique identifier information of the target terminal, or the unique sequence is a function of the unique identifier information of the target terminal.

Optionally, information sent to the target terminal by at least one TRP corresponding to the virtual cell or the at least one TRP in the target TRP set is associated with the unique identifier information.

Optionally, the information sent by the at least one TRP being associated with the unique identifier information includes one of the followings:
the information sent by the at least one TRP uses the unique identifier information as a scrambling sequence; or
the scrambling sequence in the information sent by the at least one TRP is a function of the unique identifier information.

Optionally, the network side device is a Central Unit (CU); after determining, by the network side device, the virtual cell or the target TRP set serving the target terminal based on the first information, it further including:
notifying, by the CU, at least one TRP corresponding to the virtual cell or the at least one TRP in the target TRP set to send a signal to the target terminal.

Optionally, the obtaining, by the network side device, the first information, including:
receiving, by the CU, the first information; wherein the first information includes: a first measurement result obtained by the target terminal through measuring a reference signal of a TRP in a pre-configured TRP list, and/or a second measurement result obtained by the TRP in the pre-configured TRP list through measuring a reference signal of the target terminal;
the determining, by the network side device, the virtual cell or the target TRP set serving the target terminal based on the first information, including:
   determining, by the CU, the virtual cell or the target TRP set based on the first information and the pre-configured TRP list.

Optionally, the reference signal of the TRP includes one of the followings:
a reference signal sent by the TRP, or a reference signal associated with the TRP;
the reference signal of the target terminal includes one of the followings:
   a reference signal sent by the target terminal, or a reference signal associated with the target terminal.

Optionally, the network side device is a first TRP; the obtaining, by the network side device, the first information, including:
receiving, by the first TRP, the first information sent by each of the TRPs that belong to a first TRP set and are in a pre-configured TRP list; wherein the first TRP set is determined based on the first TRP, the first information includes: a first measurement result obtained by the target terminal through measuring a reference signal of a TRP in the pre-configured TRP list, and/or a second measurement result obtained by the TRP in the pre-configured TRP list through measuring a reference signal of the target terminal;
the determining, by the network side device, the virtual cell or the target TRP set serving the target terminal based on the first information, including:
   determining, by the first TRP, the virtual cell or the target TRP set based on the first information and the pre-configured TRP list.

Optionally, the pre-configured TRP list is determined by the target terminal based on the reference signal that is sent by the TRP and detected by the target terminal at a reference signal transmission occasion; wherein the reference signal transmission occasion is determined by the target terminal based on a preset rule; or
the information processing method further includes:
sending, by the network side device, configuration information of the TRP list to the target terminal; wherein the configuration information includes at least one of the followings: identifier information of each of the TRPs in the TRP list, the reference signal corresponding to each of the TRPs, or the reference signal transmission occasion corresponding to each of the TRPs.

Optionally, the reference signal transmission occasion being determined by the target terminal based on the preset rule includes:
the reference signal transmission occasion is determined by the target terminal based on a periodic predetermined pattern; wherein the predetermined pattern is used to indicate resource occupancy of the reference signal.

Optionally, the information processing method further including:
receiving, by the network side device, capability information sent by the target terminal;
performing, by the network side device based on the capability information, processing related to the virtual cell or the target TRP set of the target terminal;
wherein the processing related to the virtual cell or the target TRP set of the target terminal includes at least one of the followings:
   a processing for configuring the virtual cell or the target TRP set for the target terminal; or
   a processing for releasing the virtual cell or the target TRP set;
   wherein the capability information includes at least one of the followings:
      indication information indicating whether the target terminal supports to configure the virtual cell or the target TRP set;
      a message for requesting the virtual cell or the target TRP set;
      a message for releasing the virtual cell or the target TRP set;
      downlink control channel resource configuration information corresponding to the virtual cell or the target TRP set; or
      frequency domain related information corresponding to downlink transmission of the virtual cell or the target TRP set.

Optionally, after determining, by the network side device, the virtual cell or the target TRP set serving the target terminal based on the first information, it further includes:
sending, by the network side device, first configuration information and/or second configuration information to the target terminal; wherein the first configuration information is configuration information of an access channel opportunity for the target terminal to access the virtual cell or the target TRP set; the second configuration information is configuration information of a physical random access channel opportunity for the target terminal to initiate access to a physical cell.

An embodiment of the present disclosure also provides an information processing method, including:
sending, by a terminal, first information to a network side device;
receiving, by the terminal, a signal sent by at least one Transmission Reception Point (TRP) corresponding to a virtual cell serving the terminal or the at least one TRP in a target TRP set serving the terminal; wherein the virtual cell or the target TRP set is determined by the network side device based on the first information.

Optionally, the sending, by the terminal, the first information to the network side device, including:
sending, by the terminal, a reference signal to the network side device, wherein the first information is carried by the reference signal, the first information includes: unique identifier information of the terminal and/or an access request sequence.

Optionally, the reference signal is generated by a unique sequence; the unique sequence is associated with the unique identifier information of the terminal, or the unique sequence is a function of the unique identifier information of the terminal.

Optionally, the information sent by the at least one TRP is associated with the unique identifier information.

Optionally, the information sent by the at least one TRP being associated with the unique identifier information includes one of the followings:
the information sent by the at least one TRP uses the unique identifier information as a scrambling sequence; or
the scrambling sequence in the information sent by the at least one TRP is a function of the unique identifier information.

Optionally, the sending, by the terminal, the first information to the network side device, including:
sending, by the terminal, a reference signal to the TRP in a pre-configured TRP list, and/or detecting, by the terminal, the reference signal sent by the TRP in the pre-configured TRP list;
measuring, by the terminal, the reference signal sent by the TRP to obtain a first measurement result;
sending, by the terminal, the first measurement result to the network side device.

Optionally, before sending, by the terminal, the first information to the network side device, it further includes:
receiving, by the terminal, configuration information of the pre-configured TRP list sent by the network side device, wherein the configuration information includes at least one of the followings: identifier information of each of the TRPs in the pre-configured TRP list, the reference signal corresponding to each of the TRPs, or a reference signal transmission occasion corresponding to each of the TRPs;
determining, by the terminal based on the configuration information, the pre-configured TRP list.

Optionally, before sending, by the terminal, the first information to the network side device, it further includes:
determining, by the terminal based on a preset rule, a reference signal transmission occasion;
detecting, by the terminal at the reference signal transmission occasion, the reference signal sent by the TRP, and recording, by the terminal, the TRP in the pre-configured TRP list.

Optionally, the determining, by the terminal based on the preset rule, the reference signal transmission occasion, including:
determining, by the terminal based on a periodic predetermined pattern, the reference signal transmission occasion; wherein the predetermined pattern is used to indicate resource occupancy of the reference signal.

Optionally, the information processing method further including:
sending, by the terminal, capability information to the network side device, wherein the capability information includes at least one of the followings:
indication information indicating whether the terminal supports to configure the virtual cell or the target TRP set;
a message for requesting the virtual cell or the target TRP set;
a message for releasing the virtual cell or the target TRP set;
downlink control channel resource configuration information corresponding to the virtual cell or the target TRP set; or
frequency domain related information corresponding to downlink transmission of the virtual cell or the target TRP set.

Optionally, before receiving, by the terminal, the signal sent by the at least one Transmission Reception Point (TRP) corresponding to the virtual cell serving the terminal or the at least one TRP in the target TRP set serving the terminal, it further includes:
receiving, by the terminal, first configuration information and/or second configuration information sent by the network side device, wherein the first configuration information is configuration information of an access channel opportunity for the terminal to access the virtual cell or the target TRP set; the second configuration information is configuration information of a physical random access channel opportunity for the terminal to initiate access to a physical cell;
initiating, by the terminal based on the first configuration information, an access process of the virtual cell or the target TRP set on the access channel opportunity, and/or initiating, by the terminal based on the second configuration information, an access process of the physical cell on the physical random access channel opportunity.

An embodiment of the present disclosure also provides a network side device, including: a transceiver, a memory, a processor, and a computer program stored in the memory and used to be executed by the processor, wherein the processor is configured to execute the computer program to implement the following steps:
obtaining first information;
determining a virtual cell or a target Transmission Reception Point (TRP) set serving a target terminal based on the first information.

Optionally, the processor, when executing the computer program, implements the following steps:
receiving a reference signal sent by the target terminal, wherein the reference signal carries the first information; the first information includes: unique identifier information of the target terminal and/or an access request sequence;
determining the virtual cell or the target TRP set serving the target terminal when the processor detects the access request sequence carried by the reference signal; and/or
determining the virtual cell or the target TRP set serving the target terminal when the processor detects the unique identifier information of the target terminal carried by the reference signal.

Optionally, a signal sent to the target terminal by the virtual cell or at least one TRP corresponding to the TRP set is associated with the unique identifier information.

Optionally, the network side device is a Central Unit (CU); the processor, when executing the computer program, implements the following steps:
notifying at least one TRP corresponding to the virtual cell or the at least one TRP in the target TRP set to send a signal to the target terminal.

Optionally, the processor, when executing the computer program, implements the following steps:
receiving the first information; wherein the first information includes: a first measurement result obtained by the target terminal through measuring a reference signal of a TRP in a pre-configured TRP list, and/or a second measurement result obtained by the TRP in the pre-configured TRP list through measuring a reference signal of the target terminal;
determining the virtual cell or the target TRP set based on the first information and the pre-configured TRP list.

Optionally, the processor, when executing the computer program, implements the following steps:
receiving the first information sent by each of the TRPs that belong to a first TRP set and are in a pre-configured TRP list; wherein the first TRP set is determined based on the first TRP, the first information includes: a first measurement result obtained by the target terminal through measuring a reference signal of each of the TRPs in the pre-configured TRP list, and/or a second measurement result obtained by the TRP in the pre-configured TRP list through measuring a reference signal of the target terminal;
determining the virtual cell or the target TRP set based on the first information and the pre-configured TRP list.

Optionally, the pre-configured TRP list is determined by the target terminal based on the reference signal that is sent by the TRP and detected by the target terminal at a reference signal transmission occasion; wherein the reference signal transmission occasion is determined by the target terminal based on a preset rule; or
the processor, when executing the computer program, implements the following steps:
sending configuration information of the pre-configured TRP list to the target terminal; wherein the configuration information includes at least one of the followings: identifier information of each of the TRPs in the pre-configured TRP list, the reference signal corresponding to each of the TRPs, or the reference signal transmission occasion corresponding to each of the TRPs.

Optionally, the processor, when executing the computer program, implements the following steps:
receiving capability information sent by the target terminal;
performing processing related to the virtual cell or the target TRP set of the target terminal based on the capability information;
wherein the processing related to the virtual cell or the target TRP set of the target terminal includes at least one of the followings:
   a processing for configuring the virtual cell or the target TRP set for the target terminal; or
   a processing for releasing the virtual cell or the target TRP set;
   wherein the capability information includes at least one of the followings:
      indication information indicating whether the target terminal supports to configure the virtual cell or the target TRP set;
      a message for requesting the virtual cell or the target TRP set;
      a message for releasing the virtual cell or the target TRP set;
      downlink control channel resource configuration information corresponding to the virtual cell or the target TRP set; or
      frequency domain related information corresponding to downlink transmission of the virtual cell or the target TRP set.

Optionally, the processor, when executing the computer program, implements the following steps:
sending first configuration information and/or second configuration information to the target terminal; wherein the first configuration information is configuration information of an access channel opportunity for the target terminal to access the virtual cell or the target TRP set; the second configuration information is configuration information of a physical random access channel opportunity for the target terminal to initiate access to a physical cell.

An embodiment of the present disclosure also provides a network side device, including:
an obtaining unit, configured to obtain first information;
a processing unit, configured to determine a virtual cell or a target Transmission Reception Point (TRP) set serving a target terminal based on the first information.

An embodiment of the present disclosure also provides a terminal, including: a transceiver, a memory, a processor, and a computer program stored in the memory and used to be executed by the processor, wherein the processor, when executing the computer program, implements the following steps:
sending first information to a network side device;
receiving a signal sent by at least one Transmission Reception Point (TRP) corresponding to a virtual cell serving the terminal or the at least one TRP in a target TRP set serving the terminal; wherein the virtual cell or the target TRP set is determined by the network side device based on the first information.

Optionally, the processor, when executing the computer program, implements the following steps:
sending a reference signal to the network side device, wherein the first information is carried by the reference signal, the first information includes: unique identifier information of the terminal and/or an access request sequence.

Optionally, a signal sent by at least one TRP is associated with the unique identifier information.

Optionally, the processor, when executing the computer program, implements the following steps:
sending a reference signal to the TRP in a pre-configured TRP list, and/or detecting the reference signal sent by the TRP in the pre-configured TRP list;
measuring the reference signal sent by the TRP to obtain a first measurement result;
sending the first measurement result to the network side device.

Optionally, the processor, when executing the computer program, implements the following steps:
receiving configuration information of the pre-configured TRP list sent by the network side device, wherein the configuration information includes at least one of the followings: identifier information of each of the TRPs in the pre-configured TRP list, the reference signal corresponding to each of the TRPs, or a reference signal transmission occasion corresponding to each of the TRPs;
determining the pre-configured TRP list based on the configuration information.

Optionally, the processor, when executing the computer program, implements the following steps:
determining a reference signal transmission occasion based on a preset rule;
detecting the reference signal sent by the TRP at the reference signal transmission occasion, and recording the TRP in the pre-configured TRP list.

Optionally, the processor, when executing the computer program, implements the following steps:
sending capability information to the network side device, wherein the capability information includes at least one of the followings:
indication information indicating whether the terminal supports to configure the virtual cell or the target TRP set;
a message for requesting the virtual cell or the target TRP set;
a message for releasing the virtual cell or the target TRP set;
downlink control channel resource configuration information corresponding to the virtual cell or the target TRP set; or
frequency domain related information corresponding to downlink transmission of the virtual cell or the target TRP set.

Optionally, the processor, when executing the computer program, implements the following steps:
receiving first configuration information and/or second configuration information sent by the network side device, wherein the first configuration information is configuration information of an access channel opportunity for the terminal to access the virtual cell or the target TRP set; the second configuration information is configuration information of a physical random access channel opportunity for the terminal to initiate access to a physical cell;
initiating an access process of the virtual cell or target TRP set on the access channel opportunity based on the first configuration information, and/or initiating an access process of the physical cell on the physical random access channel opportunity based on the second configuration information.

An embodiment of the present disclosure also provides a terminal, including:
a first sending unit, configured to send first information to network side device;
a first receiving unit, configured to receive a signal sent by at least one Transmission Reception Point (TRP) corresponding to a virtual cell serving the terminal or the at least one TRP in a target TRP set serving the terminal; wherein the virtual cell or the target TRP set is determined by the network side device based on the first information.

An embodiment of the present disclosure also provides a computer-readable storage medium. The computer-readable storage medium stores a computer program. The computer program is configured to cause a processor to execute the steps of the foregoing information processing method on the network device side or the terminal side.

Beneficial effects of the technical solutions of the present disclosure are as follows:
in the embodiments of the present disclosure, the first information is obtained through the network side device; and based on the first information, the virtual cell or target TRP set serving the target terminal is determined. In this way, the network side device determines the dedicated virtual cell or the dedicated target TRP set for the target terminal, which is conducive to transforming fixed cell transmission into mobile cell transmission, and can achieve flexible cell coverage, which can solve the problem that the known communication mechanism cannot support flexible and dynamic cell coverage.

### BRIEF DESCRIPTION OF THE DRAWINGS

Fig. 1 shows a flowchart of an information processing method of the network side device according to an embodiment of the present disclosure;
Fig. 2 shows a schematic diagram of the composition of the unique sequence according to an embodiment of the present disclosure;
Fig. 3 shows a schematic diagram of a network system according to an embodiment of the present disclosure;
Fig. 4 shows a schematic diagram of the resource occupancy of a reference signal transmission occasion according to an embodiment of the present disclosure;
Fig. 5 shows a block diagram of the network side device according to an embodiment of the present disclosure;
Fig. 6 shows another block diagram of the network side device according to an embodiment of the present disclosure;
Fig. 7 shows a flowchart of an information processing method at the terminal side according to an embodiment of the present disclosure;
Fig. 8 shows a block diagram at the terminal side according to an embodiment of the present disclosure;
Fig. 9 shows another block diagram at the terminal side according to an embodiment of the present disclosure.

### DETAILED DESCRIPTION

In order to make the technical problems, technical solutions and advantages addressed by the present disclosure clearer, a detailed description will be given below with reference to the accompanying drawings and specific embodiments. In the following description, specific details, such as specific configurations and components, are provided solely to assist in a comprehensive understanding of embodiments of the present disclosure. Accordingly, it will be apparent to those skilled in the art that various changes and modifications can be made to the embodiments described herein without departing from the scope and spirit of the disclosure. Additionally, descriptions of known functions and construction are omitted for clarity and conciseness.

It will be understood that reference throughout this specification to "one embodiment" or "an embodiment" means that a particular feature, structure, or characteristic associated with the embodiment is included in at least one embodiment of the present disclosure. Thus, the appearances of "in one embodiment" or "in an embodiment" in various places throughout this specification are not necessarily referring to the same embodiment. Furthermore, the particular features, structures or characteristics may be combined in any suitable manner in one or more embodiments.

In various embodiments of the present disclosure, it should be understood that the sequence numbers of the following processes does not mean the order of execution. The execution order of each process should be determined by its functions and internal logic, and the sequence numbers should not constitute any limitations on the implementations of the embodiments of the present disclosure.

Additionally, the terms "system" and "network" are often used interchangeably herein.

The technical solutions provided by the embodiments of the present disclosure can be applied to a variety of systems, especially a 6G system. For example, applicable systems may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a terminal device and a network device. The system can also include a core network part, such as the evolved packet system (EPS), and a 5G System (5GS), etc.

The network device and the terminal device may each perform Multi-Input Multi-Output (MIMO) transmission with each other by using one or more antennas. The MIMO transmission may be Single User MIMO (SU-MIMO) or Multiple User MIMO (MU-MIMO). According to the configuration and quantity of antenna combinations, the MIMO transmission may be two Dimensional-MIMO (2D-MIMO), three Dimensional-MIMO (3D-MIMO), Full Dimensional-MIMO (FD-MIMO) or massive-MIMO, and may be diversity transmission, pre-coded transmission, beam forming transmission, or the like.

In the embodiments of the present disclosure, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In the embodiments of the present disclosure, the term "plurality" refers to two or more than two, and other quantifiers are similar to it.

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in the present disclosure, all other embodiments obtained by those of ordinary skill in the art without making creative efforts fall within the scope of the present disclosure.

The 6G wireless communication envisions wide coverage, full spectrum, strong security, and full application. In the future, the 6G system needs to support high throughput at the Tbps data level. While supporting high throughput, it also needs to support an ultra-reliable and low latency communication (URLLC) with extremely low end-to-end latency to meet a demand of a service such as naked-eye 3D in a metaverse service. It needs to further enhance the user experience in a high-speed mobility scenario such as a high-speed train, and needs to support a massive node transmission requirement of industrial Internet of Things. In short, the 6G design needs to have higher spectrum efficiency and power efficiency than a 5G transmission solution.

An ultimate goal of communication is that anyone can exchange any information with anyone at anytime and anywhere. To achieve this goal, a mobile communication transmission systems from 2G to 5G are all based on cellular communication systems. Each cell has a fixed frequency usage range and pre-planned cell coverage, and multiple cells collaborate to achieve seamless coverage.

A Radio Access Network (RAN) side/a core network assigns a Physical layer Cell Identity (PCI) to each cell, and a base station sends a synchronization signal carrying the PCI; a user equipment (UE) or a terminal receives a cell-specific synchronization signal sent by the base station to perform cell search. When the UE identifies cell information carried by the cell-specific signal and performs a downlink synchronization process, a cell discovery process is completed.

The UE initiates a random access process to a current residing cell, and the base station assigns a UE identifier (UE ID) using a random access response signaling, such as Temporary Radio Network Temporary Identifier (such as T-RNTI)/Cell Radio Network Temporary Identifier (C-RNTI). The UE enters a connected mode information handshake, which assists the UE to complete uplink synchronization; then the base station initiates a data and reference signal transmission process to the UE. The UE side will measure the channel and report Channel Quality Information (CQI) according to an instruction of the base station to assist the base station in scheduling and MIMO transmission.

The UE can also perform RMM measurement at a reference signal transmission occasion configured by the terminal, which is used for cell selection and cell reselection in an idle mode of Radio Resource Control (RRC), and cell handover process in the connected mode; the connected UE also needs to perform the radio link monitoring process according to the reference signal, and periodically report the synchronization/desynchronization status to the upper layer, thereby triggering the radio link failure process to shut down the transmitter, and start the RRC connection reconstruction process. From the basic process of Uu interface communication described above, it can be seen that the communication between the UE and the base station is centered on the base station from beginning to end, and data transmission is based on fixed cell planning.

The embodiments of the present disclosure provide an information processing method, a network side device, and a terminal to solve a problem that the known communication mechanism cannot support flexible and dynamic cell coverage.

An information processing method and a network side device, and another information processing method and a terminal are based on a same inventive concept. Since a principle of solving problem by an information processing method and a network side device, and another information processing method and a terminal are similar, the implementation of the network side device and the corresponding method, and the terminal and the corresponding method can refer to each other, and redundant details will not be elaborated further.

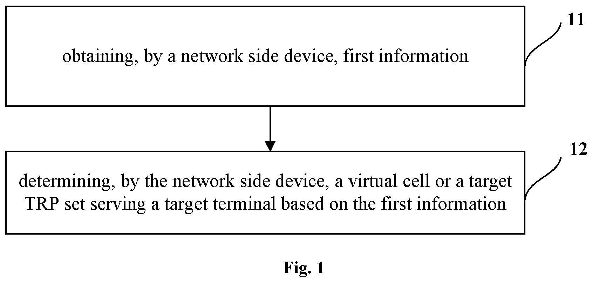

As shown in Fig. 1, an embodiment of the present disclosure provides an information processing method, which specifically includes the following steps:
step 11: obtaining, by a network side device, first information;
step 12: determining, by the network side device, a virtual cell or a target Transmission Reception Point (TRP) set serving a target terminal based on the first information.

Optionally, the first information may include, but is not limited to, at least one of the followings: unique identifier information of the target terminal carried in the reference signal sent by the target terminal to the network side device, an access request sequence carried in the reference signal sent by the target terminal to the network side device, a measurement result obtained by the network side device based on the reference signal sent by the target terminal, or a measurement result obtained by the target terminal through measuring a reference signal of the network side device, etc.

Optionally, the network side device determines the virtual cell or the target TRP set serving the target terminal when the network side device detects the unique identifier information of the target terminal carried by the reference signal; or, the network side device determines the virtual cell or the target TRP set serving the target terminal when the network side device detects the access request sequence carried by the reference signal; or, the network side device determines the virtual cell or the target TRP set serving the target terminal when the network side device detects the unique identifier information of the target terminal and/or an access request sequence carried by the reference signal.

Optionally, the target TRP set is a dedicated TRP set of the target terminal, or the target TRP set is determined by the network side device in a semi-static or dynamic manner.

Optionally, the virtual cell is determined by the dedicated TRP set of the target terminal; or the virtual cell is determined by a TRP set determined by the network side device in the semi-static or dynamic manner.

In the above solution, the first information is obtained by the network side device; and the virtual cell or the target TRP set serving the target terminal is determined based on the first information. In this way, the network side device determines a dedicated virtual cell or a dedicated target TRP set serving the target terminal, such as the virtual cell or the target TRP set is determined in a semi-static or dynamic manner. The virtual cell or the target TRP set can change dynamically with a change of time and/or a movement of the terminal, thereby achieving the transformation of fixed cell transmission to mobile cell transmission, and also achieving flexible cell coverage, which can solve the problem that the known communication mechanism cannot support flexible and dynamic cell coverage.

Optionally, the obtaining, by the network side device, the first information, including:
receiving, by the network side device, a reference signal sent by the target terminal, wherein the first information is carried by the reference signal; the first information includes: the unique identifier information of the target terminal and/or an access request sequence;
the determining, by the network side device, the virtual cell or the target TRP set serving the target terminal based on the first information, including:
   determining, by the network side device, the virtual cell or the target TRP set serving the target terminal when the network side device detects the access request sequence carried by the reference signal; and/or
   determining, by the network side device, the virtual cell or the target TRP set serving the target terminal when the network side device detects the unique identifier information of the target terminal carried by the reference signal.

Specifically, the network side device receives the reference signal sent by the target terminal, wherein the reference signal carries the unique identifier information of the target terminal, so that the network side device can identify the target terminal, and then configure a dedicated virtual cell or a dedicated target TRP set for the target terminal.

For example, the reference signal may a Wireless Access Point Reference Signal (AP-RS). Optionally, the target terminal may determine a transmission resource of the AP-RS and send the AP-RS to the network side device on the transmission resource, and the AP-RS may carry the unique identifier information corresponding to the target terminal.

Optionally, the unique identifier information can be a globally unique identifier, or a regionally unique identifier, etc., and the embodiments of the present disclosure are not limited thereto.

Optionally, the reference signal is generated by a unique sequence; the unique sequence is associated with the unique identifier information of the target terminal, or the unique sequence is a function of the unique identifier information of the target terminal.

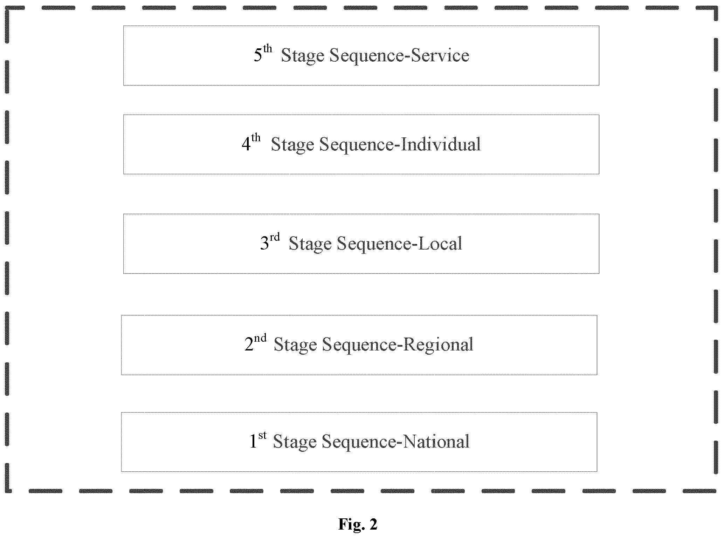

For example, the reference signal is an AP-RS, and the AP-RS is a globally unique sequence. Optionally, the globally unique sequence can be composed of at least one pseudo-random sequence, as shown in Fig. 2, including but not limited to at least one of the followings: geographic location information, node attribute information, or service type information, etc. The pseudo-random sequence can be a gold sequence, an orthogonal sequence, or other sequences, etc., and the embodiments of the present disclosure are not limited thereto.

Optionally, the unique identifier information of the target terminal can be directly carried on the AP-RS, such as at least part of an AP-RS sequence is used to represent the unique identifier information of the target terminal, or the unique identifier information is indirectly associated with the AP-RS, such as the unique sequence is the function of the unique identifier information of the target terminal, such as the unique identifier information of the target terminal can be used as a scrambling for one or more gold sequences, i.e., an initial input state value of a cyclic shift register

Optionally, the AP-RS could also be a sequence with a unique identifier within a predetermined first area, and a coverage range of the predetermined first area is much larger than a coverage range of a fixed cell, or it can be an area defined based on a preset rule, such as a Tracking Area (TA), or it can be a country/region. The area includes multiple fixed cells, and the fixed cell refers to a physical cell with pre-planned coverage and PCI configuration under the current mobile communication architecture; or the virtual cell and the area defined by the network is a function of time, for example, AP-RS has unique identifier information within 3 hours. When the unique identifier information is a globally identifier, no two UEs can have a same AP-RS identifier.

Optionally, the network side device may use the AP-RS sequence of the target terminal or the globally or regionally unique identifier information carried by a predetermined AP-RS sequence as a target terminal identifier/a virtual cell identifier/a TRP set identifier. A data channel or a reference signal of the virtual cell can use the target terminal identifier/the virtual cell identifier for scrambling.

For example, the network side device can configure the virtual cell identifier for the target terminal using a higher-layer signaling or a physical layer signaling, or determine the configuration of the virtual cell identifier using a predetermined method (e.g., protocol agreement). The higher-layer signaling could be an RRC signaling, and the physical layer signaling could be the AP-RS sequence sent by the target TRP set. For example, multiple TRPs corresponding to a virtual cell send a same AP-RS sequence for the UE to identify the virtual cell identifier; wherein the predetermined method could be to determine the virtual cell identifier associated with the UE based on the AP-RS of the UE. It should be noted that the virtual cell identifier may not exist explicitly; for example, the unique identifier information of the target terminal associated with the signal sent by the virtual cell to the target terminal can also be equivalently regarded as the virtual cell identifier, etc., and the embodiments of the present disclosure are not limited thereto.

Optionally, information sent to the target terminal by at least one TRP corresponding to the virtual cell or the at least one TRP in the target TRP set is associated with the unique identifier information.

For example, the information sent by the at least one TRP corresponding to the virtual cell or the at least one TRP in the target TRP set to the target terminal can be data transmission or data scheduling information associated with the AP-RS information, etc., which is not limited to the embodiment of the present disclosure.

Optionally, the information sent by the at least one TRP being associated with the unique identifier information includes one of the followings:
the information sent by the at least one TRP uses the unique identifier information as a scrambling sequence; or
the scrambling sequence in the information sent by the at least one TRP is a function of the unique identifier information.

For example, the network side device can receive the unique identifier information sent by the target terminal or determine the unique identifier information corresponding to the target terminal based on the reference signal sent by the target terminal. In this way, in the case that the network side device determines or receives the unique identifier information of the target terminal, it determines, based on the unique identifier information, in a semi-static or dynamic manner to configure a dedicated virtual cell or a dedicated target TRP set for the target terminal. The information sent to the target terminal by the at least one TRP corresponding to the virtual cell or the at least one TRP in the target TRP set is associated with the unique identifier information.

For example, the information sent by the at least one TRP uses the unique identifier information as a scrambling sequence; or the scrambling sequence in the information sent by the at least one TRP is a function of the unique identifier information. When the target terminal receives downlink data sent by the at least one TRP corresponding to the virtual cell or the TRP set, it can use the aforementioned unique identifier information for a descrambling operation; correspondingly, uplink data sent by the target terminal side can also use the unique identifier information for a scrambling operation, etc.

In the embodiment, the AP-RS carrying unique identifier information sent by the target terminal side assists the network side device in identifying the target terminal. The network side device determines the target TRS set or the virtual cell that is time-varying or based on a terminal position change, which can avoid frequent handshakes between the base station and the terminal, and there is no ambiguity in the understanding between the TRP and the UE. It ensures that the network side device can dynamically or semi-statically configure a dedicated virtual cell or a dedicated target TRP set for the target terminal, which is easy to implement and has high robustness.

Optionally, the network side device is a Central Unit (CU); after determining, by the network side device, the virtual cell or the target TRP set serving the target terminal based on the first information, it further includes:
notifying, by the CU, at least one TRP corresponding to the virtual cell or the at least one TRP in the target TRP set to send a signal to the target terminal.

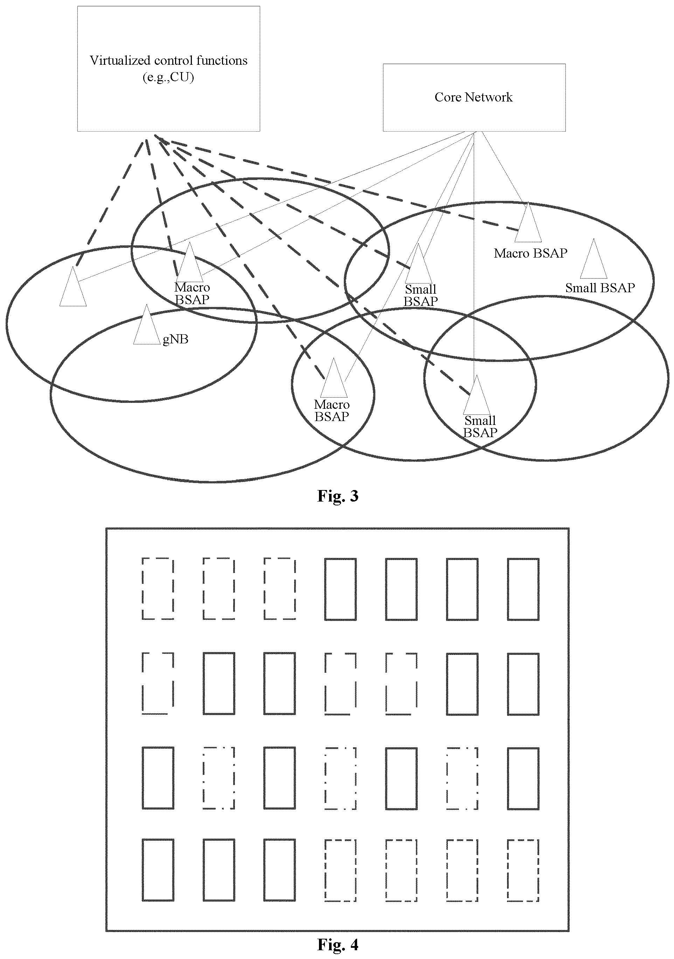

For example, in the case that there is a CU in the network side device, the CU can determine the dedicated virtual cell or the dedicated target TRP set serving the target terminal, and notify each of the TRPs corresponding to the virtual cell or each of the TRPs in the target TRP set to send a signal to the target terminal (such as the CU can notify each of the TRPs through the RAN side interface). The CU is the central control node of multiple TRPs, and generally the CU is a macro base station, as shown in Fig. 3.

Optionally, the signal sent by the at least one TRP to the target terminal can be associated with unique identifier information of the target terminal, wherein the unique identifier information of the target terminal can be carried in the reference signal sent by the target terminal to the network side device. For details, it may refer to the above embodiments, which will not be repeated here to avoid redundancy.

Optionally, the network side device obtains the first information, including:
receiving, by the CU, the first information; wherein the first information includes: a first measurement result obtained by the target terminal through measuring a reference signal of a TRP in a pre-configured TRP list, and/or a second measurement result obtained by the TRP in the pre-configured TRP list through measuring a reference signal of the target terminal;
the determining, by the network side device, the virtual cell or the target TRP set serving the target terminal based on the first information, including:
   determining, by the CU, the virtual cell or the target TRP set based on the first information and the pre-configured TRP list.

In the embodiments of the present disclosure, a base station or a terminal may be referred to as an Access Point (AP), for example, a base station may be referred to as a BS-AP, and a terminal may be referred to as a UE-AP. When the target terminal sends an AP-RS at an AP-RS transmission occasion, the network side device receives the AP-RS and measures a signal reception quality to obtain a signal reception quality measurement result of the AP-RS (i.e., a second measurement result), such as each of the TRPs in the pre-configured TRP list measures the AP-RS sent by the target terminal, and the second measurement result obtained by each of the TRPs measurement are fed back to the CU respectively. Alternatively, the terminal may also detect the AP-RS sent by the network side device at the AP-RS transmission occasion, measure a channel quality, obtain a channel quality measurement result (i.e., a first measurement result), and report the channel quality measurement result to the network side device, such as the target terminal feeds back the first measurement result through measuring the reference signal of each of the TRPs to the CU, or the target terminal feeds back the first measurement result through measuring the reference signal of each of the TRPs to the corresponding TRP, and the TRP sends the first measurement result to the CU, etc. The network side device determines the dedicated target TRP set of the target terminal, such as a quantity and a type of the TRP, from the pre-configured TRP list based on the signal reception quality measurement result and/or the channel quality measurement result reported by the target terminal; or, determines the dedicated virtual cell of the target terminal based on the target TRP set determined from the pre-configured TRP list.

Optionally, the reference signal of the TRP includes one of the followings:
a reference signal sent by the TRP, or a reference signal associated with the TRP;
the reference signal of the target terminal includes one of the followings:
   a reference signal sent by the target terminal, or a reference signal associated with the target terminal.

The reference signal sent by the TRP can be a UE-specific signal for CSI measurement, which can be used to measure a channel condition of the terminal, and the reference signal may not be used for a TRP identifier; or it can be the reference signal sent by the TRP, or the reference signal associated with the TRP. The reference signal associated with the TRP may be the reference signal corresponding to the TRP identifier, which can be used by other access points to measure the TRP. For example, the reference signal associated with the TRP can be understood as the reference signal identifier corresponding to the TRP. The reference signal associated with the target terminal can be the reference signal corresponding to the terminal identifier, for example, the reference signal carrying the terminal identifier.

Optionally, the AP-RS sent by the target terminal may carry unique identifier information to assist the network side device in identifying the target terminal, and/or the AP-RS sent by the target terminal may also carry an access request sequence. When the network side device detects the AP-RS carrying the access request sequence, it configures the dedicated virtual cell or the dedicated target TRP set for the target terminal.

Optionally, the network side device is a first TRP; the obtaining, by the network side device, the first information, including:
receiving, by the first TRP, the first information sent by each of the TRPs that belong to a first TRP set and are in a pre-configured TRP list; wherein the first TRP set is determined based on the first TRP, the first information includes: a first measurement result obtained by the target terminal through measuring a reference signal of each of the TRPs in the pre-configured TRP list, and/or a second measurement result obtained by the TRP in the pre-configured TRP list through measuring a reference signal of the target terminal;
the determining, by the network side device, the virtual cell or the target TRP set serving the target terminal based on the first information, including:
   determining, by the first TRP, the virtual cell or the target TRP set based on the first information and the pre-configured TRP list.

For example, in the case that there is no CU in the network side device, interaction information between the first TRP and each of the TRPs in the first TRP set can be used to determine the virtual cell or the target TRP set serving the target terminal.

The first TRP set may include one or more TRPs adjacent to the first TRP. For example, the target terminal can send AP-RS to each of the TRPs in the first TRP set at the AP-RS transmission occasion, each of the TRPs in the first TRP set receives the AP-RS, and measures the signal reception quality to obtain the signal reception quality measurement result of the AP-RS (i.e., the second measurement result), and sends the second measurement result to the first TRP; or, the terminal can also detect the AP-RS of each of the TRPs in the first TRP set at the AP-RS transmission occasion, and measure the channel quality to obtain the channel quality measurement result (i.e., the first measurement result), the target terminal can report the channel quality measurement result to the corresponding TRP, and the TRP feeds it back to the first TRP, or the target terminal reports the first measurement result to the first TRP, etc.

For another example, the target terminal can send the AP-RS to each of the TRPs in the pre-configured TRP list at the AP-RS transmission occasion, and the TRP in the pre-configured TRP list receives the AP-RS and measures the signal reception quality to obtain the signal reception quality measurement result of the AP-RS (i.e., the second measurement result). The TRPs in the pre-configured TRP list can exchange information with each other, so that the TRP in the first TRP set can feed back the second measurement result obtained by measuring each of the TRPs in the pre-configured TRP list to the first TRP. That is, the first TRP can learn about the signal reception quality of the target terminal by each of the TRPs in the pre-configured TRP list; or the terminal can also detect the AP-RS of each of the TRPs in the pre-configured TRP list at the AP-RS transmission occasion, and measure the channel quality to obtain the channel quality measurement result (i.e., the first measurement result). The target terminal can report the channel quality measurement result to the corresponding TRP, and based on the information interaction between the TRPs in the TRP list, the first measurement result measured by the target terminal can be fed back to the first TRP through the TRP in the first TRP set, or the target terminal can report the first measurement result to the first TRP, etc.

In this way, the first TRP can determine the TRP in the pre-configured TRP list that meets a preset rule as the dedicated target TRP set of the target terminal, such as the quantity and the type of the TRPs, based on the signal reception quality measurement result and/or the channel quality measurement result reported by the target terminal; or, determine the dedicated virtual cell of the target terminal, based on the target TRP set determined by the TRP in the pre-configured TRP list that meets the preset rule. The preset rule may be that the signal reception quality and/or the channel quality exceeds a preset threshold, or other rules, etc., and the embodiments of the present disclosure are not limited thereto.

Optionally, the AP-RS sent by the target terminal may carry unique identifier information to assist network side device in recognizing the target terminal, and/or, the AP-RS sent by the target terminal may also carry an access request sequence. When the network side device detects the AP-RS carrying the access request sequence, it can configure a dedicated virtual cell or a dedicated target TRP set for the target terminal.

In the above embodiment, the CU selects the optimal dedicated target TRP set or dedicated virtual cell for the target terminal, or selects the optimal dedicated target TRP set or dedicated virtual cell for the target terminal through information interaction between the TRPs to ensure the optimal transmission beam, so that the base station and the terminal use the best transmission path for transmission, converting the transmission into short-distance communication, which is conducive to improving transmission capacity of the terminal and better serving the terminal.

Optionally, the virtual cell may be composed of one or more TRPs, and the virtual cell transmits the signal to the target terminal; at least one of the TRP corresponding to the virtual cell, the quantity of the TRPs in the target TRP set, the TRP identifier, a coverage range of the virtual cell, or a coverage area of the virtual cell may be a function of a position of the target terminal, or may be associated with the position of the target terminal. More specifically, the virtual cell is composed of at least one TRP. As the position of the target terminal moves, at least one of the TRP constituting the virtual cell, the quantity of the TRPs in the target TRP set, the type of the TRPs, or the TRP identifier (such as the identifier used to identify different hardware, like a 48-bit MAC address or a 5G-S-TMSI) changes accordingly; or changes accordingly with time. The coverage range of the virtual cell and/or the coverage area of the virtual cell changes accordingly with the change of the position of the target terminal, or changes accordingly with time.

It should be noted that the above-mentioned cell is virtual, and there is actually no traditional physical layer cell; so the virtual cell/flexible cell is not configured with the PCI. That is, the RAN side does not configure the PCI with an ID range of 0-1007 for the virtual cell. More specifically, the terminal does not expect to detect the PCI configured by the RAN side or a Primary Synchronization Signal (PSS) and/or a Secondary Synchronization Signal (SSS) corresponding to the PCI in the signal sent by the virtual cell to the terminal.

It should also be noted that the PCI is a PCI in a 3G/4G/5G mobile communications system, and the cell ID range is 0-1008, that is, it can represent 1008 physical layer cells. As a cell identifier, only the physical layer can recognize it, and the PCI is carried by the PSS/SSS sent by the base station used in a UE cell search process.

The signal sent to the target terminal by at least one TRP corresponding to the virtual cell or at least one TRP in the target TRP set is associated with the unique identifier information corresponding to the target terminal. For example, when the virtual cell performs downlink data transmission or signaling transmission to the target terminal, the unique identifier information of the target terminal is used as the scrambling sequence, or the scrambling sequence is a function of the unique identifier information of the target terminal. Correspondingly, the uplink transmission performed by the target terminal to the virtual cell or the target TRP set can be equivalent to the virtual cell having a virtual cell identifier. Optionally, the virtual cell identifier is associated with the unique identifier information corresponding to the target terminal, or is a function of the unique identifier information corresponding to the target terminal. And the virtual cell identifier does not change with the change of at least one of the type of the TRPs, the TRP identifier, the quantity of the TRPs, the coverage range, or the coverage area in the virtual cell.

Optionally, the method further includes:
sending, by the network side device, configuration information of the pre-configured TRP list to the target terminal; wherein the configuration information includes at least one of the followings: identifier information of each of the TRPs in the pre-configured TRP list, the reference signal corresponding to each of the TRPs, or the reference signal transmission occasion corresponding to each of the TRPs.

Specifically, in the case that the network side device configures the TRP list for the target terminal, the network side device obtaining the first information may include: the network side device receiving the reference signal sent by the target terminal at the reference signal transmission occasion, and/or receiving the first measurement result obtained by the target terminal through measuring the reference signal of the TRP in the pre-configured TRP list; the network side device measures the reference signal sent by the target terminal to obtain the second measurement result. The first information includes the first measurement result and/or the second measurement result.

For example, the network side device configures the TRP list and/or an AP-RS occasion corresponding to each of the TRPs in the TRP list. Optionally, the network side device can use the higher-layer signaling to configure the information of the TRP list for the target terminal, and the information can include at least one of the TRP identifier, the AP-RS information corresponding to each of the TRPs, or the AP-RS occasion corresponding to each of the TRPs.

In this way, the target terminal can send the reference signal to each of the TRPs in the TRP list based on the TRP list configured by the network side device and/or the AP-RS occasion corresponding to each of the TRPs in the TRP list. The TRP in the TRP list measures the signal quality of the reference signal to obtain the second measurement result. Alternatively, the target terminal can also detect the AP-RS of each of the TRPs in the TRP list at the AP-RS occasion and measure the channel quality to obtain the first measurement result. In this way, the network side device can obtain the first information including the first measurement result and/or the second measurement result.

Optionally, the pre-configured TRP list is determined by the target terminal based on the reference signal sent by the TRP detected at the reference signal transmission occasion; wherein, the reference signal transmission occasion is determined by the target terminal based on the preset rule.

Specifically, in the case that the pre-configured TRP list and/or the reference signal transmission occasion are determined by the terminal, the network side device obtains the first information, including: the network side device receives the reference signal sent by the target terminal at the reference signal transmission occasion determined by the target terminal, and/or receives the first measurement result through measuring the reference signal of the TRP in the TRP list sent by the target terminal; the network side device measures the reference signal sent by the target terminal to obtain the second measurement result. In this way, the network side device can obtain the first information including the first measurement result and/or the second measurement result.

Optionally, the reference signal transmission occasion is determined by the target terminal based on the preset rule, including:
the reference signal transmission occasion is determined by the target terminal based on a periodic predetermined pattern; wherein the predetermined pattern is used to indicate the resource occupancy of the reference signal.

For example, the target terminal can determine the AP-RS transmission occasion and the corresponding TRP list based on the preset rule. For example, based on the protocol agreement, the transmission occasion of the AP-RS corresponding to the BS-AP and/or the UE-AP is determined. When the AP-RS corresponding to the TRP is detected at the corresponding AP-RS occasion, it includes the TRP in the corresponding TRP list. As shown in Fig. 4, the AP-RS corresponding to the BS-AP and the UE-AP are periodically transmitted at the AP-RS transmission occasion and have different predetermined patterns. As shown in Fig. 4, the periodic predetermined pattern is given, in which the rectangular boxes of different lines can correspond to transmission patterns of different AP-RS, and the periodic AP-RS transmission occasion can be determined by the periodic predetermined pattern. When the base station or the UE does not detect the AP-RS corresponding to the transmission pattern, it is considered that the AP does not exist nearby. When the AP is a BS-AP, the BS-AP can obtain the AP-RS transmitted nearby, including the AP-RS sent by the target UE; when the AP is a UE-AP, the UE-AP can obtain the measurement result of the AP-RS transmitted by the nearby BS-AP.

Furthermore, the target terminal measures the AP-RS corresponding to the TRP based on the TRP list and the corresponding AP-RS occasion configured by the network side, and feeds back the above measurement result to the network side device; or the UE side determines the AP-RS occasion and the corresponding TRP list based on the preset rule, and reports the measurement result to the network side device based on the measurement result of the TRP; or the BS-AP sends the measurement result of the AP-RS corresponding to the UE to the adjacent BS-AP or the CU.

In this way, the network side device can determine the virtual cell or the target TRP set serving the target terminal, such as the quantity and the type of TRPs, based on the measurement result reported by the target terminal and/or the measurement result of the AP-RS corresponding to the target terminal reported by the TRP. Optionally, the data channel or the reference signal of the virtual cell can use the unique identifier information/the virtual cell identifier of the target terminal for scrambling (although the unique identifier information corresponding to the target terminal is fixed, the target TRS set corresponding to the unique identifier information is constantly changing).

In the embodiment, the network side device configures the TRP list for the target terminal, or the target terminal determines the AP-RS occasion and the corresponding TRP list based on the preset rule, and the target terminal measures the AP-RS corresponding to each of the TRPs in the TRP list and feeds back the channel quality to the virtual cell or the target TRP set, and/or the adjacent base station measures a reception quality of the AP-RS corresponding to the target terminal. In this way, the network side device can jointly determine the TRP set in the virtual cell corresponding to the target UE based on the measurement result of the BS-AP and/or the measurement result of the UE-AP, which is conducive for the network side device to timely and accurately update the TRP corresponding to the virtual cell or timely and accurately update the target TRP set.

Optionally, the information processing method further includes:
receiving, by the network side device, capability information sent by the target terminal;
performing, by the network side device based on the capability information, processing related to the virtual cell or the target TRP set of the target terminal;
wherein the processing related to the virtual cell or the target TRP set of the target terminal includes at least one of the followings:
   a processing for configuring the virtual cell or the target TRP set for the target terminal; or
   a processing for releasing the virtual cell or the target TRP set;
   wherein the capability information includes at least one of the followings:
      indication information indicating whether the target terminal supports to configure the virtual cell or the target TRP set;
      a message for requesting the virtual cell or the target TRP set;
      a message for releasing the virtual cell or the target TRP set;
      downlink control channel resource configuration information corresponding to the virtual cell or the target TRP set; or
      frequency domain related information corresponding to downlink transmission of the virtual cell or the target TRP set.

For example, the target terminal may report the capability information of supporting the virtual cell to the network side device, such as the target terminal at least needs to report whether it supports the configuration of the virtual cell or the target TRP set, so that the network side device can perform the processing of whether to configure the virtual cell or the target TRP set for the target terminal. Alternatively, the capability information may also include: the message for requesting the virtual cell or the target TRP set, the message for releasing the virtual cell or the target TRP set, etc. The network side device can perform the processing of a processing for configuring the virtual cell or the target TRP set for the target terminal based on the request message; and perform the processing of a processing for releasing the virtual cell or the target TRP set based on the release message. In addition, the target terminal can also report to the network side device the downlink control channel resource configuration information corresponding to the virtual cell preferred by the target terminal, such as time domain information and/or frequency domain information of the search space/CORESET; the bandwidth information corresponding to the downlink transmission of the virtual cell preferred by the target terminal, such as the bandwidth information including the bandwidth size, the configuration information of the Bandwidth Part (BWP), etc., and the information related to a quantity of sending and receiving antennas preferred by the target terminal, so that the network side device can configure a better dedicated virtual cell or a better dedicated target TRP set for the target terminal, etc., and the embodiments of the present disclosure are not limited thereto.

The above-mentioned terminal capability reporting channel can be that the capability information is carried by the AP-RS sequence sent by the terminal; optionally, the terminal can also report the capability information to the network side device through a Physical Uplink Shared Channel (PUSCH)/Physical Uplink Control Channel (PUCCH). For example, the terminal maintains dual connectivity with the virtual cell and the fixed cell (such as an existing physical cell) at the same time, or the terminal maintains dual connectivity with the target TRP set and the fixed cell at the same time, etc., the embodiments of the present disclosure are not limited thereto.

In the embodiment, it is considered that a future 6G network may coexist with a 4G/5G network, or the future 6G network may also be compatible with the physical cell of the 4G/5G network, rather than only the virtual cell. For example, there is a situation where the terminal maintains dual connectivity with the fixed cell and the virtual cell, or the terminal maintains dual connectivity with the target TRP set and the fixed cell at the same time. In this way, when a terminal that supports the virtual cell sends the capability information of supporting the virtual cell to the fixed cell at the network side and sends the message for requesting the virtual cell, the base station will provide a virtual cell service. Feedback by the terminal on the configuration information of a preferred virtual cell is also conducive to the flexible configuration of the virtual cell at the network side, and when the terminal completes data transmission, such as exiting from the metaverse, it can send a release request of the virtual cell to the network side to release the connection in time.

Optionally, the obtaining, by the network side device, the first information, including:
the network side device receives the reference signal sent by the target terminal on the access channel transmission opportunity, and carries the first information through the reference signal;
the network side device determines the virtual cell or the target TRP set serving the target terminal based on the first information, including:
when the network side device detects that the first information carried by the reference signal includes the access request sequence, it determines the virtual cell or the target TRP set serving the target terminal.

Optionally, the access channel transmission opportunity is determined by the target terminal based on the preset rule, or the access channel transmission opportunity is configured by the network side device.

For example, the target terminal can send the AP-RS to the network side device, and the AP-RS can carry a request sequence. Specifically, the terminal can determine the corresponding access channel transmission opportunity based on the preset rule; or the terminal receives and parses the configuration information of the access channel transmission opportunity corresponding to the virtual cell carried by the broadcast message sent by the network, and determines the access channel transmission opportunity based on the configuration information; the target terminal sends the AP-RS sequence on the access channel transmission opportunity, and the AP-RS sequence includes at least the access request sequence corresponding to the target terminal, and/or the unique identifier information of the target terminal. Optionally, the access request sequence is associated with the virtual cell corresponding to the target terminal. Optionally, the access sequence can be part of the AP-RS sequence.

After the network side detects the AP-RS including the access request sequence, it can allocate the virtual cell for the target terminal requesting access, such as initiating a data transmission process to the target terminal through the AP-RS including the unique identifier information, thereby reducing an access process of the target terminal.

Optionally, when the target terminal determines the access sequence transmission opportunity based on the preset rule, it may also use the periodic predetermined pattern for determination, as shown in Fig. 3, which will not be further elaborated here.

Optionally, after determining, by the network side device, the virtual cell or the target TRP set serving the target terminal based on the first information, it further includes:
the network side device sends a first configuration information and/or a second configuration information to the target terminal; wherein the first configuration information is configuration information of an access channel opportunity for the target terminal to access the virtual cell or the target TRP set; the second configuration information is configuration information of a physical random access channel opportunity for the target terminal to initiate access to a physical cell.

For example, in the 6G system, there can also be a RRC Idle/Inactive/Connected mode similar to those in the 4G/5G system. When the UE is in the RRC Idle/Inactive mode, the target terminal can detect the cell PCI and receive a broadcast message such as a paging message and a system message transmitted by the cell. For example, the broadcast message configures a virtual cell access resource for the terminal in the RRC Idle mode. The system message configures a virtual cell access channel opportunity and/or a PRACH opportunity for the terminal to initiate access to the cell.

It should be noted that the PRACH opportunity of the cell corresponds to the PCI of the cell, while the access channel opportunity for the virtual cell corresponds to a virtual cell without configuring the PCI.

The target terminal can choose to initiate an access process to the virtual cell or the cell receiving the broadcast message. Specifically, when the target terminal initiates the access process to the virtual cell, that is, receives the data transmission of the virtual cell, the data is related to the AP-RS of the target terminal. When the target terminal initiates the access process to the cell receiving the broadcast message, the target terminal can follow a traditional 4-step or 2-step PRACH access process, and the received data is related to the PCI of the cell.

In the embodiment, an access occasion is determined by the target terminal based on the preset rule or is carried by the system message. When the target terminal accesses the channel through the AP-RS carrying unique identifier information, the virtual cell can use the unique identifier information as an UE ID for data transmission, thereby avoiding the 4-step random access process where the base station notifies the terminal of a T-CNTI and a C-RNTI.

In the above solution, the network side device configures the target terminal with the dedicated virtual cell or the dedicated target TRP set, which can transform the fixed cell transmission into short-distance communication. This is beneficial to improve the receiving signal-to-noise ratio, reduce the cell handover delay, and support low-latency, high-throughput transmission.

The network side device involved in the embodiments of the present disclosure may be a base station, and the base station may include multiple cells that provide services to terminals. Depending on the specific application, a base station can also be called an access point, or it can be a device in the access network that communicates with wireless terminal devices through one or more sectors on the air interface, or it can be named by another name. A network device can be used to exchange received air frames with Internet Protocol (IP) packets and act as a router between the wireless terminal device and the rest of the access network, wherein the rest of the access network can include the IP communications network. Network devices may also coordinate attribute management of the air interface. For example, the network device involved in the embodiments of the present disclosure may be a network device (Base Transceiver Station, BTS) in Global System for Mobile communications (GSM) or Code Division Multiple Access (CDMA), or it can be a network device (NodeB) in a Wide-band Code Division Multiple Access (WCDMA), or an evolved Node B (eNB or e-NodeB) in a Long Term Evolution (LTE) system, a 5G base station (gNB) in a 5G network architecture (next generation system), or a Home evolved base station (Home evolved Node B, HeNB), a relay node, a femto, a pico, etc., which are not limited in the embodiments of the present disclosure. In some network structures, network devices may include Centralized Unit (CU) nodes and Distributed Unit (DU) nodes, and the centralized units and distributed units may also be arranged geographically separately.

The above embodiment introduces the information processing method on the network device side of the present disclosure. The following embodiments will further describe the corresponding network side device in conjunction with the accompanying drawings.

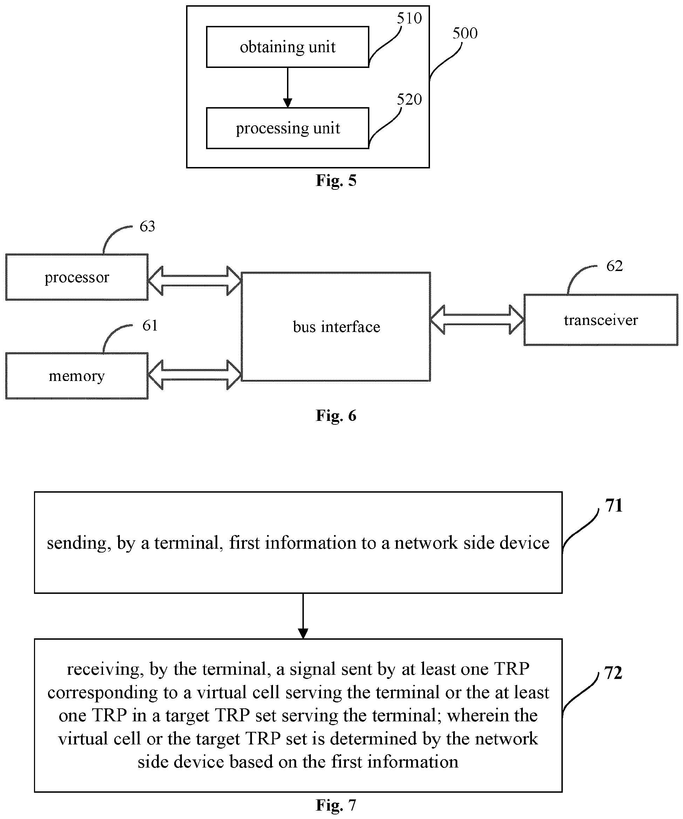

Specifically, as shown in Fig. 5, an embodiment of the present disclosure provides a network side device 500, including:
an obtaining unit 510, configured to obtain first information;
a processing unit 520, configured to determine a virtual cell or a target Transmission Reception Point (TRP) set serving a target terminal based on the first information.

Optionally, the target TRP set is a dedicated TRP set of the target terminal, or the target TRP set is determined by the network side device in a semi-static or dynamic manner;
the virtual cell is determined by the dedicated TRP set of the target terminal; or the virtual cell is determined by a TRP set determined by the network side device in the semi-static or dynamic manner.

Optionally, the obtaining unit 510 is further configured to:
receive a reference signal sent by the target terminal, wherein the first information is carried by the reference signal; the first information includes: unique identifier information of the target terminal and/or an access request sequence.

The processing unit 520 is configured to:
determine the virtual cell or the target TRP set serving the target terminal when the access request sequence carried by the reference signal is detected; and/or
determine the virtual cell or the target TRP set serving the target terminal when the unique identifier information of the target terminal carried by the reference signal is detected.

Optionally, the reference signal is generated by a unique sequence; the unique sequence is associated with the unique identifier information of the target terminal, or the unique sequence is a function of the unique identifier information of the target terminal.

Optionally, information sent to the target terminal by at least one TRP corresponding to the virtual cell or the at least one TRP in the target TRP set is associated with the unique identifier information.

Optionally, the information sent by the at least one TRP being associated with the unique identifier information includes one of the followings:
the information sent by the at least one TRP uses the unique identifier information as a scrambling sequence; or
the scrambling sequence in the information sent by the at least one TRP is a function of the unique identifier information.

Optionally, the network side device is a Central Unit (CU); the network side device 500 further includes:
a notification unit, configured to notify at least one TRP corresponding to the virtual cell or the at least one TRP in the target TRP set to send a signal to the target terminal.

Optionally, the obtaining unit 510 is further configured to:
receive the first information; wherein the first information includes: a first measurement result obtained by the target terminal through measuring a reference signal of a TRP in a pre-configured TRP list, and/or a second measurement result obtained by the TRP in the pre-configured TRP list through measuring a reference signal of the target terminal.

The processing unit 520 is further configured to:
determine the virtual cell or the target TRP set based on the first information and the pre-configured TRP list.

Optionally, the reference signal of the TRP includes one of the followings:
a reference signal sent by the TRP, or a reference signal associated with the TRP;
the reference signal of the target terminal includes one of the followings:
   a reference signal sent by the target terminal, or a reference signal associated with the target terminal.

Optionally, the network side device is a first TRP; the obtaining unit 510 is further configured to:
receive the first information sent by each of the TRPs that belong to a first TRP set and are in a pre-configured TRP list; wherein the first TRP set is determined based on the first TRP, the first information includes: a first measurement result obtained by the target terminal through measuring a reference signal of a TRP in the pre-configured TRP list, and/or a second measurement result obtained by the TRP in the pre-configured TRP list through measuring a reference signal of the target terminal

The processing unit 520 is further configured to:
determine the virtual cell or the target TRP set based on the first information and the pre-configured TRP list.

Optionally, the pre-configured TRP list is determined by the target terminal based on the reference signal that is sent by the TRP and detected by the target terminal at a reference signal transmission occasion; wherein the reference signal transmission occasion is determined by the target terminal based on a preset rule; or
the network side device 500 further includes:
a first sending unit, configured to send configuration information of the TRP list to the target terminal; wherein the configuration information includes at least one of the followings: identifier information of each of the TRPs in the TRP list, the reference signal corresponding to each of the TRPs, or the reference signal transmission occasion corresponding to each of the TRPs.

Optionally, the reference signal transmission occasion being determined by the target terminal based on the preset rule includes:
the reference signal transmission occasion is determined by the target terminal based on a periodic predetermined pattern; wherein the predetermined pattern is used to indicate resource occupancy of the reference signal.

Optionally, the network side device 500 further includes:
a receiving unit, configured to receive capability information sent by the target terminal;
an executing unit, configured to perform processing related to the virtual cell or the target TRP set of the target terminal based on the capability information;.
wherein the processing related to the virtual cell or the target TRP set of the target terminal includes at least one of the followings:
   a processing for configuring the virtual cell or the target TRP set for the target terminal; or
   a processing for releasing the virtual cell or the target TRP set;
   wherein the capability information includes at least one of the followings:
      indication information indicating whether the target terminal supports to configure the virtual cell or the target TRP set;
      a message for requesting the virtual cell or the target TRP set;
      a message for releasing the virtual cell or the target TRP set;
      downlink control channel resource configuration information corresponding to the virtual cell or the target TRP set; or
      frequency domain related information corresponding to downlink transmission of the virtual cell or the target TRP set.

Optionally, the network side device 500 further includes:
a second sending unit, configured to send first configuration information and/or second configuration information to the target terminal; wherein the first configuration information is configuration information of an access channel opportunity for the target terminal to access the virtual cell or the target TRP set; the second configuration information is configuration information of a physical random access channel opportunity for the target terminal to initiate access to a physical cell.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the prior art, or the entirety or parts of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage media include: USB flash disk, removable hard disk, Read-Only Memory (ROM), Random Access Memory (RAM), magnetic disk or optical disc and other media that can store program code.

It should be noted here that the above-mentioned network side device provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

In order to better achieve the above purpose, the embodiment of the present disclosure provides a network side device, as shown in Fig. 6, including a memory 61, a transceiver 62, and a processor 63; wherein the memory 61 is configured to store a computer program; the transceiver 62 is configured to receive and send data under the control of the processor 63; the processor 63 is configured to read the computer program in the memory 61 and perform the following operations:
obtaining first information;
determining a virtual cell or a target Transmission Reception Point (TRP) set serving a target terminal based on the first information.

Optionally, the target TRP set is a dedicated TRP set of the target terminal, or the target TRP set is determined by the network side device in a semi-static or dynamic manner;
the virtual cell is determined by the dedicated TRP set of the target terminal; or the virtual cell is determined by a TRP set determined by the network side device in the semi-static or dynamic manner.

Optionally, the processor 63 is configured to read the computer program in the memory 61 and perform the following operations:
receive a reference signal sent by the target terminal, wherein the first information is carried by the reference signal; the first information includes: unique identifier information of the target terminal and/or an access request sequence;
determine the virtual cell or the target TRP set serving the target terminal when the access request sequence carried by the reference signal is detected; and/or
determine the virtual cell or the target TRP set serving the target terminal when the unique identifier information of the target terminal carried by the reference signal is detected.

Optionally, the reference signal is generated by a unique sequence; the unique sequence is associated with the unique identifier information of the target terminal, or the unique sequence is a function of the unique identifier information of the target terminal.

Optionally, information sent to the target terminal by at least one TRP corresponding to the virtual cell or the at least one TRP in the target TRP set is associated with the unique identifier information.

Optionally, the information sent by the at least one TRP being associated with the unique identifier information includes one of the followings:
the information sent by the at least one TRP uses the unique identifier information as a scrambling sequence; or
the scrambling sequence in the information sent by the at least one TRP is a function of the unique identifier information.

Optionally, the network side device is a Central Unit (CU); optionally, the processor 63 is configured to read the computer program in the memory 61 and perform the following operations:
notify at least one TRP corresponding to the virtual cell or the at least one TRP in the target TRP set to send a signal to the target terminal.

Optionally, the processor 63 is configured to read the computer program in the memory 61 and perform the following operations:
receive the first information; wherein the first information includes: a first measurement result obtained by the target terminal through measuring a reference signal of a TRP in a pre-configured TRP list, and/or a second measurement result obtained by the TRP in the pre-configured TRP list through measuring a reference signal of the target terminal;
determine the virtual cell or the target TRP set based on the first information and the pre-configured TRP list.

Optionally, the reference signal of the TRP includes one of the followings:
a reference signal sent by the TRP, or a reference signal associated with the TRP;
the reference signal of the target terminal includes one of the followings:
   a reference signal sent by the target terminal, or a reference signal associated with the target terminal.

Optionally, the network side device is a first TRP; the processor 63 is configured to read the computer program in the memory 61 and perform the following operations:
receive the first information sent by each of the TRPs that belong to a first TRP set and are in a pre-configured TRP list; wherein the first TRP set is determined based on the first TRP, the first information includes: a first measurement result obtained by the target terminal through measuring a reference signal of a TRP in the pre-configured TRP list, and/or a second measurement result obtained by the TRP in the pre-configured TRP list through measuring a reference signal of the target terminal;
determine the virtual cell or the target TRP set based on the first information and the pre-configured TRP list.

Optionally, the pre-configured TRP list is determined by the target terminal based on the reference signal that is sent by the TRP and detected by the target terminal at a reference signal transmission occasion; wherein the reference signal transmission occasion is determined by the target terminal based on a preset rule; or
optionally, the processor 63 is configured to read the computer program in the memory 61 and perform the following operations:
send configuration information of the TRP list to the target terminal; wherein the configuration information includes at least one of the followings: identifier information of each of the TRPs in the TRP list, the reference signal corresponding to each of the TRPs, or the reference signal transmission occasion corresponding to each of the TRPs.

Optionally, the reference signal transmission occasion being determined by the target terminal based on the preset rule includes:
the reference signal transmission occasion is determined by the target terminal based on a periodic predetermined pattern; wherein the predetermined pattern is used to indicate resource occupancy of the reference signal.

Optionally, the processor 63 is configured to read the computer program in the memory 61 and perform the following operations:
receiving capability information sent by the target terminal;
performing processing related to the virtual cell or the target TRP set of the target terminal based on the capability information;
wherein the processing related to the virtual cell or the target TRP set of the target terminal includes at least one of the followings:
   a processing for configuring the virtual cell or the target TRP set for the target terminal; or
   a processing for releasing the virtual cell or the target TRP set;
   wherein the capability information includes at least one of the followings:
      indication information indicating whether the target terminal supports to configure the virtual cell or the target TRP set;
      a message for requesting the virtual cell or the target TRP set;
      a message for releasing the virtual cell or the target TRP set;
      downlink control channel resource configuration information corresponding to the virtual cell or the target TRP set; or
      frequency domain related information corresponding to downlink transmission of the virtual cell or the target TRP set.

Optionally, the processor 63 is configured to read the computer program in the memory 61 and perform the following operations:
sending first configuration information and/or second configuration information to the target terminal; wherein the first configuration information is configuration information of an access channel opportunity for the target terminal to access the virtual cell or the target TRP set; the second configuration information is configuration information of a physical random access channel opportunity for the target terminal to initiate access to a physical cell.

In Fig. 6, the bus architecture may include any number of interconnected buses and bridges, and connects various circuits including one or more processors represented by the processor x10 and the memory represented by the memory 61. The bus architecture can also link together various other circuits such as peripherals, voltage regulators, and power management circuits, which are all well known in the art and therefore will not be described further herein. The bus interface provides the interface. The transceiver 62 may be a plurality of elements, including a transmitter and a receiver, to allow for communication with various other apparatuses on the transmission medium. The transmission medium includes wireless channels, wired channels, optical cables, and other transmission media. The processor 63 is responsible for managing the bus architecture and general processing, and the memory 61 can store data used by the processor 63 when performing operations.

The processor 63 may be a Central Processing Unit (CPU), an Application Specific Integrated Circuit (ASIC), a Field Programmable Gate Array (FPGA) or Complex Programmable Logic Device (CPLD). The processor can also adopt a multicore architecture.

It should be noted here that the above-mentioned network side device provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

The information processing method of the embodiment of the present disclosure has been introduced above from the network side. The information processing method at the terminal side will be further described below with reference to the accompanying drawings.

As shown in Fig. 7, the embodiment of the present disclosure provides an information processing method, including the following steps.

Step 71: sending, by a terminal, first information to a network side device.

Optionally, the first information may include, but is not limited to, at least one of the followings: unique identifier information of the target terminal carried in the reference signal sent by the target terminal to the network side device, an access request sequence carried in the reference signal sent by the target terminal to the network side device, a measurement result obtained by the network side device based on the reference signal sent by the target terminal, or a measurement result obtained by the target terminal through measuring a reference signal of the network side device, etc.

Step 72: receiving, by the terminal, a signal sent by at least one Transmission Reception Point (TRP) corresponding to a virtual cell serving the terminal or the at least one TRP in a target TRP set serving the terminal; wherein the virtual cell or the target TRP set is determined by the network side device based on the first information.

Optionally, the target TRP set is a dedicated TRP set determined by the network side device for the target terminal, or the target TRP set is a dedicated TRP set determined by the network side device for the target terminal in a semi-static or dynamic manner.

Optionally, the virtual cell is determined by the dedicated TRP set determined by the network side device for the target terminal; or, the virtual cell is determined by the TRP set determined by the network side device for the target terminal in a semi-static or dynamic manner.

In the embodiments of the present disclosure, the terminal sends first information to the network side device, and the network side device determines the virtual cell or the target TRP set serving the target terminal based on the first information. The terminal receives a signal sent by at least one TRP corresponding to a virtual cell serving the terminal or the at least one TRP in a target TRP set serving the terminal. In this way, the network side device determines the dedicated virtual cell or the dedicated target TRP set for the target terminal, which is conducive to transforming fixed cell transmission into mobile cell transmission, and can achieve flexible cell coverage, thereby solving the problem that the known communication mechanism cannot support flexible and dynamic cell coverage.

Optionally, the sending, by the terminal, the first information to the network side device, including:
the terminal sends the reference signal to the network side device; wherein the first information is carried by the reference signal, the first information carries unique identifier information of the terminal and/or an access request sequence.

Specifically, the terminal sends the reference signal carrying the first information to the network side device, and the first information includes the unique identifier information of the terminal; the network side device receives the reference signal sent by the target terminal, so that the network side device can identify the target terminal, and then configure the dedicated virtual cell or the dedicated target TRP set for the target terminal.

For example, the reference signal can be an AP-RS. Optionally, the target terminal can determine the transmission resource of AP-RS and send the AP-RS to the network side device on the transmission resource. The AP-RS can carry the unique identifier information corresponding to the target terminal. Optionally, the unique identifier information can be a globally unique identifier, or a regionally unique identifier, etc., and the embodiments of the present disclosure are not limited thereto.

Optionally, the reference signal is generated by a unique sequence; the unique sequence is associated with the unique identifier information of the target terminal, or the unique sequence is a function of the unique identifier information of the target terminal.

For example, the reference signal is an AP-RS, and the AP-RS is a globally unique sequence. Optionally, the globally unique sequence can be composed of at least one pseudo-random sequence, as shown in Fig. 2, including but not limited to at least one of the followings: geographic location information, node attribute information, or service type information, etc. The pseudo-random sequence can be a gold sequence, an orthogonal sequence, or other sequences, etc., and the embodiments of the present disclosure are not limited thereto.

Optionally, the unique identifier information of the target terminal can be directly carried on the AP-RS, such as at least part of an AP-RS sequence is used to represent the unique identifier information of the target terminal, or the unique identifier information is indirectly associated with the AP-RS, such as the unique sequence is the function of the unique identifier information of the target terminal, such as the unique identifier information of the target terminal can be used as a scrambling for one or more gold sequences, i.e., an initial input state value of a cyclic shift register

Optionally, the AP-RS could also be a sequence with a unique identifier within a predetermined first area, and a coverage range of the predetermined first area is much larger than a coverage range of a fixed cell, or it can be an area defined based on a preset rule, such as a Tracking Area (TA), or it can be a country/region. The area includes multiple fixed cells, and the fixed cell refers to a physical cell with pre-planned coverage and PCI configuration under the current mobile communication architecture; or the virtual cell and the area defined by the network is a function of time, for example, the AP-RS has unique identifier information within 3 hours. When the unique identifier information is a globally identifier, no two UEs can have a same AP-RS identifier.

Optionally, the information sent by the at least one TRP is associated with the unique identifier information.

For example, the information sent by the at least one TRP corresponding to the virtual cell or the at least one TRP in the target TRP set to the target terminal can be data transmission or data scheduling information associated with the AP-RS information, etc., which is not limited to the embodiment of the present disclosure.

Optionally, the information sent by the at least one TRP being associated with the unique identifier information includes one of the followings:
the information sent by the at least one TRP uses the unique identifier information as a scrambling sequence; or
the scrambling sequence in the information sent by the at least one TRP is a function of the unique identifier information.

The information sent by the at least one TRP may include the signal sent by the at least one TRP.

For example, the network side device can receive the unique identifier information sent by the target terminal or determine the unique identifier information corresponding to the target terminal based on the reference signal sent by the target terminal. In this way, in the case that the network side device determines or receives the unique identifier information of the target terminal, based on the unique identifier information, it determines in a semi-static or dynamic manner to configure a dedicated virtual cell or a dedicated target TRP set for the target terminal. The information sent to the target terminal by the at least one TRP corresponding to the virtual cell or the at least one TRP in the target TRP set is associated with the unique identifier information.

For example, the information sent by the at least one TRP uses the unique identifier information as a scrambling sequence; or the scrambling sequence in the information sent by the at least one TRP is a function of the unique identifier information. When the target terminal receives downlink data sent by the at least one TRP corresponding to the virtual cell or the TRP set, it can use the aforementioned unique identifier information for a descrambling operation; correspondingly, uplink data sent by the target terminal side can also use the unique identifier information for a scrambling operation, etc.

In the embodiment, the AP-RS carrying unique identifier information sent by the target terminal side assists the network side device in identifying the target terminal. The network side device determines the target TRS set or the virtual cell that is time-varying or based on a terminal position change, which can avoid frequent handshakes between the base station and the terminal, and there is no ambiguity in the understanding between the TRP and the UE. It ensures that the network side device can dynamically or semi-statically configure a dedicated virtual cell or a dedicated target TRP set for the target terminal, which is easy to implement and has high robustness.

Optionally, the sending, by the terminal, the first information to the network side device, including:
sending, by the terminal, a reference signal to the TRP in a pre-configured TRP list, and/or detecting, by the terminal, the reference signal sent by the TRP in the pre-configured TRP list;
measuring, by the terminal, the reference signal sent by the TRP to obtain a first measurement result;
sending, by the terminal, the first measurement result to the network side device.

For example, the target terminal sends an AP-RS at an AP-RS transmission occasion, the network side device receives the AP-RS and measures a signal reception quality to obtain a signal reception quality measurement result of the AP-RS (i.e., a second measurement result), such as each of the TRPs in the pre-configured TRP list measures the AP-RS sent by the target terminal, and the second measurement result obtained by each of the TRPs measurement are fed back to the CU respectively, and the CU configures the dedicated virtual cell or the dedicated target TRP set for the terminal. Alternatively, the terminal may also detect the AP-RS sent by the network side device at the AP-RS transmission occasion, measure a channel quality, obtain a channel quality measurement result (i.e., a first measurement result), and report the channel quality measurement result to the network side device, such as the target terminal feeds back the first measurement result through measuring the reference signal of each of the TRPs to the CU, or the target terminal feeds back the first measurement result through measuring the reference signal of each of the TRPs to the corresponding TRP, and the TRP sends the first measurement result to the CU, etc., and the CU configures the dedicated virtual cell or the dedicated target TRP set for the terminal.

The network side device (such as CU) determines the dedicated target TRP set of the target terminal, such as a quantity and a type of the TRP, from the pre-configured TRP list based on the signal reception quality measurement result and/or the channel quality measurement result reported by the target terminal; or, determines the dedicated virtual cell of the target terminal based on the target TRP set determined from the pre-configured TRP list.

For another example, the target terminal can send the AP-RS to each of the TRPs in the first TRP set (such as the first TRP set may include one or more TRPs adjacent to the first TRP) at the AP-RS transmission occasion, each of the TRPs in the first TRP set receives the AP-RS, and measures the signal reception quality to obtain the AP-RS signal reception quality measurement result (i.e., the second measurement result), and sends the second measurement result to the first TRP. Alternatively, the terminal can also detect the AP-RS of each of the TRPs in the first TRP set at the AP-RS transmission occasion, and measure the channel quality to obtain the channel quality measurement result (i.e., the first measurement result), the target terminal can report the channel quality measurement result to the corresponding TRP, and the TRP feeds it back to the first TRP, or the target terminal reports the first measurement result to the first TRP, etc., and the first TRP configures the dedicated virtual cell or the dedicated target TRP set for the terminal.

Alternatively, the target terminal can send the AP-RS to each of the TRPs in the pre-configured TRP list at the AP-RS transmission occasion, and the TRP in the pre-configured TRP list receives the AP-RS and measures the signal reception quality to obtain the signal reception quality measurement result of the AP-RS (i.e., the second measurement result). The TRPs in the pre-configured TRP list can exchange information with each other, so that the TRP in the first TRP set can feed back the second measurement result obtained by measuring each of the TRPs in the pre-configured TRP list to the first TRP. That is, the first TRP can learn about the signal reception quality of the target terminal by each of the TRPs in the pre-configured TRP list; or the terminal can also detect the AP-RS of each of the TRPs in the pre-configured TRP list at the AP-RS transmission occasion, and measure the channel quality to obtain the channel quality measurement result (i.e., the first measurement result). The target terminal can report the channel quality measurement result to the corresponding TRP, and based on the information interaction between the TRPs in the TRP list, the first measurement result measured by the target terminal can be fed back to the first TRP through the TRP in the first TRP set, or the target terminal can report the first measurement result to the first TRP, etc., and the first TRP configures the dedicated virtual cell or the dedicated target TRP set for the terminal.

In this way, the first TRP can determine the TRP in the pre-configured TRP list that meets a preset rule as the dedicated target TRP set of the target terminal, such as the quantity and the type of the TRPs, based on the signal reception quality measurement result and/or the channel quality measurement result reported by the target terminal; or, determine the dedicated virtual cell of the target terminal, based on the target TRP set determined by the TRP in the pre-configured TRP list that meets the preset rule. The preset rule may be that the signal reception quality and/or the channel quality exceeds a preset threshold, or other rules, etc., and the embodiments of the present disclosure are not limited thereto.

Optionally, the AP-RS sent by the target terminal may carry unique identifier information to assist network side device in recognizing the target terminal, and/or, the AP-RS sent by the target terminal may also carry an access request sequence. When the network side device detects the AP-RS carrying the access request sequence, it can configure a dedicated virtual cell or a dedicated target TRP set for the target terminal.

Optionally, the terminal receives configuration information of the pre-configured TRP list sent by the network side device; wherein the configuration information includes at least one of the followings: identifier information of each of the TRPs in the pre-configured TRP list, a reference signal corresponding to each of the TRPs, or a reference signal transmission occasion corresponding to each of the TRPs; the terminal determines the pre-configured TRP list based on the configuration information.

For example, the network side device configures the TRP list and/or an AP-RS occasion corresponding to each of the TRPs in the TRP list. Optionally, the network side device can use the higher-layer signaling to configure the information of the TRP list for the target terminal, and the information can include at least one of the TRP identifier, the AP-RS information corresponding to each of the TRPs, or the AP-RS occasion corresponding to each of the TRPs.

In this way, the target terminal can send the reference signal to each of the TRPs in the TRP list based on the TRP list configured by the network side device and/or the AP-RS occasion corresponding to each of the TRPs in the TRP list. The TRP in the TRP list measures the signal quality of the reference signal to obtain the second measurement result. Alternatively, the target terminal can also detect the AP-RS of each of the TRPs in the TRP list at the AP-RS occasion and measure the channel quality to obtain the first measurement result. In this way, the network side device can obtain the first information including the first measurement result and/or the second measurement result, and then configures the dedicated virtual cell or the dedicated target TRP set for the terminal based on the first information.

Optionally, before sending, by the terminal, the first information to the network side device, it further includes:
determining, by the terminal based on a preset rule, a reference signal transmission occasion;
detecting, by the terminal at the reference signal transmission occasion, the reference signal sent by the TRP, and recording, by the terminal, the TRP in the pre-configured TRP list.

That is, in the embodiments, the pre-configured TRP list can be determined by the terminal side.

Optionally, the determining, by the terminal based on the preset rule, the reference signal transmission occasion, including:
determining, by the terminal based on a periodic predetermined pattern, the reference signal transmission occasion; wherein the predetermined pattern is used to indicate resource occupancy of the reference signal.

For example, the target terminal can determine the AP-RS transmission occasion and the corresponding TRP list based on the preset rule. For example, based on the protocol agreement, the transmission occasion of the AP-RS corresponding to the BS-AP and/or the UE-AP is determined. When the AP-RS corresponding to the TRP is detected at the corresponding AP-RS occasion, it includes the TRP in the corresponding TRP list. As shown in Fig. 4, the AP-RS corresponding to the BS-AP and the UE-AP are periodically transmitted at the AP-RS transmission occasion and have different predetermined patterns. As shown in Fig. 4, the periodic predetermined pattern is given, in which the rectangular boxes of different lines can correspond to transmission patterns of different AP-RS, and the periodic AP-RS transmission occasion can be determined by the periodic predetermined pattern. When the base station or the UE does not detect the AP-RS corresponding to the transmission pattern, it is considered that the AP does not exist nearby. When the AP is a BS-AP, the BS-AP can obtain the AP-RS transmitted nearby, including the AP-RS sent by the target UE; when the AP is a UE-AP, the UE-AP can obtain the measurement result of the AP-RS transmitted by the nearby BS-AP.

Furthermore, the target terminal measures the AP-RS corresponding to the TRP based on the TRP list configured by the network side and the corresponding AP-RS occasion, and feeds back the above measurement result to the network side device; or the UE side determines the AP-RS occasion and the corresponding TRP list based on the preset rule, and reports the measurement result to the network side device based on the measurement result of the TRP; or the BS-AP sends the measurement result of the AP-RS corresponding to the UE to the adjacent BS-AP or the CU.

In this way, the network side device can determine the virtual cell or the target TRP set serving the target terminal, such as the quantity and the type of TRPs, based on the measurement result reported by the target terminal and/or the measurement result of the AP-RS corresponding to the target terminal reported by the TRP. Optionally, the data channel or the reference signal of the virtual cell can use the unique identifier information/the virtual cell identifier of the target terminal for scrambling (although the unique identifier information corresponding to the target terminal is fixed, the target TRS set corresponding to the unique identifier information is constantly changing).

In the embodiment, the network side device configures the TRP list for the target terminal, or the target terminal determines the AP-RS occasion and the corresponding TRP list based on the preset rule, and the target terminal measures the AP-RS corresponding to each of the TRPs in the TRP list and feeds back the channel quality to the virtual cell or the target TRP set, and/or the adjacent base station measures a reception quality of the AP-RS corresponding to the target terminal. In this way, the network side device can jointly determine the TRP set in the virtual cell corresponding to the target UE based on the measurement result of the BS-AP and/or the measurement result of the UE-AP, which is conducive for the network side device to timely and accurately update the TRP corresponding to the virtual cell or timely and accurately update the target TRP set.

Optionally, the information processing method further includes:
the terminal sends capability information to the network side device; wherein the capability information includes at least one of the followings:
indication information indicating whether the terminal supports to configure the virtual cell or the target TRP set;
a message for requesting the virtual cell or the target TRP set;
a message for releasing the virtual cell or the target TRP set;
downlink control channel resource configuration information corresponding to the virtual cell or the target TRP set; or
frequency domain related information corresponding to downlink transmission of the virtual cell or the target TRP set.

For example, the target terminal may report the capability information of supporting the virtual cell to the network side device, such as the target terminal at least needs to report whether it supports the configuration of the virtual cell or the target TRP set, so that the network side device can perform the processing of whether to configure the virtual cell or the target TRP set for the target terminal. Alternatively, the capability information may also include: the message for requesting the virtual cell or the target TRP set, the message for releasing the virtual cell or the target TRP set, etc. The network side device can perform the processing of a processing for configuring the virtual cell or the target TRP set for the target terminal based on the request message; and perform the processing of a processing for releasing the virtual cell or the target TRP set based on the release message. In addition, the target terminal can also report to the network side device the downlink control channel resource configuration information corresponding to the virtual cell preferred by the target terminal, such as time domain information and/or frequency domain information of the search space/CORESET; the bandwidth information corresponding to the downlink transmission of the virtual cell preferred by the target terminal, such as the bandwidth information including the bandwidth size, the configuration information of the Bandwidth Part (BWP), etc., and the information related to a quantity of sending and receiving antennas preferred by the target terminal, so that the network side device can configure a better dedicated virtual cell or a better dedicated target TRP set for the target terminal, etc., and the embodiments of the present disclosure are not limited thereto.

The above-mentioned terminal capability reporting channel can be that the capability information is carried by the AP-RS sequence sent by the terminal; optionally, the terminal can also report the capability information to the network side device through a Physical Uplink Shared Channel (PUSCH)/Physical Uplink Control Channel (PUCCH). For example, the terminal maintains dual connectivity with the virtual cell and the fixed cell (such as an existing physical cell) at the same time, or the terminal maintains dual connectivity with the target TRP set and the fixed cell at the same time, etc., the embodiments of the present disclosure are not limited thereto.

In the embodiment, it is considered that a future 6G network may coexist with a 4G/5G network, or the future 6G network may also be compatible with the physical cell of the 4G/5G network, rather than only the virtual cell. For example, there is a situation where the terminal maintains dual connectivity with the fixed cell and the virtual cell, or the terminal maintains dual connectivity with the target TRP set and the fixed cell at the same time. In this way, when a terminal that supports the virtual cell sends the capability information of supporting the virtual cell to the fixed cell at the network side and sends the message for requesting the virtual cell, the base station will provide a virtual cell service. Feedback by the terminal on the configuration information of a preferred virtual cell is also conducive to the flexible configuration of the virtual cell at the network side, and when the terminal completes data transmission, such as exiting from the metaverse, it can send a release request of the virtual cell to the network side to release the connection in time.

Optionally, sending, by a terminal, first information to a network side device, including:
the terminal sends a reference signal on an access channel transmission opportunity; wherein the reference signal includes an access request sequence, and the access channel transmission opportunity is determined by the terminal based on a preset rule, or the access channel transmission opportunity is configured by the network side device.

For example, the target terminal can send the AP-RS to the network side device, and the AP-RS can carry a request sequence. Specifically, the terminal can determine the corresponding access channel transmission opportunity based on the preset rule; or the terminal receives and parses the configuration information of the access channel transmission opportunity corresponding to the virtual cell carried by the broadcast message sent by the network side device, and determines the access channel transmission opportunity based on the configuration information; the target terminal sends the AP-RS sequence on the access channel transmission opportunity, and the AP-RS sequence includes at least the access request sequence corresponding to the target terminal, and/or the unique identifier information of the target terminal. Optionally, the access request sequence is associated with the virtual cell corresponding to the target terminal. Optionally, the access sequence can be part of the AP-RS sequence.

After the network side detects the AP-RS including the access request sequence, it can allocate the virtual cell for the target terminal requesting access, such as initiating a data transmission process to the target terminal through the AP-RS including the unique identifier information, thereby reducing an access process of the target terminal.

Optionally, before receiving, by the terminal, the signal sent by the at least one Transmission Reception Point (TRP) corresponding to the virtual cell serving the terminal or the at least one TRP in the target TRP set serving the terminal, it further includes:
receiving, by the terminal, first configuration information and/or second configuration information sent by the network side device, wherein the first configuration information is configuration information of an access channel opportunity for the terminal to access the virtual cell or the target TRP set; the second configuration information is configuration information of a physical random access channel opportunity for the terminal to initiate access to a physical cell;
initiating, by the terminal based on the first configuration information, an access process of the virtual cell or the target TRP set on the access channel opportunity, and/or initiating, by the terminal based on the second configuration information, an access process of the physical cell on the physical random access channel opportunity.

For example, in the 6G system, there can also be a RRC Idle/Inactive/Connected mode similar to those in the 4G/5G system. When the UE is in the RRC Idle/Inactive mode, the target terminal can detect the cell PCI and receive a broadcast message such as a paging message and a system message transmitted by the cell. For example, the broadcast message configures a virtual cell access resource for the terminal in the RRC Idle mode. The system message configures a virtual cell access channel opportunity and/or a PRACH opportunity for the terminal to initiate access to the cell.

It should be noted that the PRACH opportunity of the cell corresponds to the PCI of the cell, while the access channel opportunity for the virtual cell corresponds to a virtual cell without configuring the PCI.

The target terminal can choose to initiate an access process to the virtual cell or the cell receiving the broadcast message. Specifically, when the target terminal initiates the access process to the virtual cell, that is, receives the data transmission of the virtual cell, the data is related to the AP-RS of the target terminal. When the target terminal initiates the access process to the cell receiving the broadcast message, the target terminal can follow a traditional 4-step or 2-step PRACH access process, and the received data is related to the PCI of the cell.

In the embodiment, an access occasion is determined by the target terminal based on the preset rule or is carried by the system message. When the target terminal accesses the channel through the AP-RS carrying unique identifier information, the virtual cell can use the unique identifier information as an UE ID for data transmission, thereby avoiding the 4-step random access process where the base station notifies the terminal of a T-CNTI and a C-RNTI.

In the above solution, the network side device configures the target terminal with the dedicated virtual cell or the dedicated target TRP set, which can transform the fixed cell transmission into short-distance communication. This is beneficial to improve the receiving signal-to-noise ratio, reduce the cell handover delay, and support low-latency and high-throughput transmission.

An interaction process between the network side device and the terminal will be described below in conjunction with the embodiments.

### Embodiment 1

Step 101: a target terminal sends a reference signal to a network side device; wherein the reference signal carries unique identifier information and/or an access request sequence of the target terminal;
Step 102: the network side device receives the reference signal and can identify the target terminal based on the unique identifier information carried by the reference signal, so that a dedicated virtual cell or a dedicated target TRP set can be configured for the terminal in a dynamic or semi-static manner; and/or, the network side device configures a dedicated virtual cell or a dedicated target TRP set for the target terminal when detecting that the reference signal carries the access request sequence.

Optionally, the reference signal is generated by a unique sequence; the unique sequence is associated with the unique identifier information of the target terminal, or the unique sequence is a function of the unique identifier information of the target terminal.

Step 103: the network side device uses the unique identifier information carried by the reference signal as a target terminal identifier or a virtual cell/target TRP set identifier; a data channel or the reference signal of the virtual cell/target TRP set uses the target terminal identifier or the virtual cell/target TRP set identifier for scrambling.

Step 104: the target terminal receives downlink data sent by at least one TRP corresponding to the virtual cell or the at least one TRP in the target TRP set. The target terminal uses the unique identifier information for a descrambling operation; and/or, uplink data sent by the target terminal can also use the unique identifier information for a scrambling operation.

Embodiment 2: a network side device includes a Central Unit (CU, generally, the CU is a macro base station).

Step 201: a target terminal sends a reference signal to each of the TRPs, and/or receives the reference signal sent by each of the TRPs.

Step 202: the target terminal measures the reference signal of the TRP to obtain a measurement result, and reports the result to the CU.

Step 203: each of the TRPs measures the reference signal of a terminal to obtain the measurement result, and reports the result to the CU.

Step 204: the CU determines a virtual cell or a target TRP set serving the target terminal based on the measurement result of the reference signal sent by each of the TRPs to the target terminal, and/or the measurement result of the reference signal sent by the target terminal to each of the TRPs.

Step 205: the CU notifies each of the TRPs corresponding to the virtual cell or each of the TRPs in the target TRP set to send a signal to the target terminal.

Optionally, the reference signal sent by the target terminal can carry unique identifier information of the target terminal to facilitate the CU in identifying the target terminal. The signal sent to the target terminal by at least one TRP corresponding to the virtual cell or by at least one TRP in the target TRP set is associated with the unique identifier information.

Optionally, the signal sent by the at least one TRP being associated with the unique identifier information includes one of the followings:
the signal sent by the at least one TRP uses the unique identifier information as a scrambling sequence; or
the scrambling sequence in the signal sent by the at least one TRP is a function of the unique identifier information.

Embodiment 3: a network side device is a first TRP (when there is no CU in the network side device, the first TRP can be a central node or a TRP agreed upon among multiple TRPs).

Step 301: a target terminal sends a reference signal to each of the TRPs and/or receives the reference signal sent by each of the TRPs.

Step 302: the target terminal measures the reference signal of the TRP to obtain a measurement result and reports the measurement result to the corresponding TRP or the first TRP.

Step 303: each of the TRPs measures the reference signal of a terminal to obtain the measurement result and reports the measurement result to the first TRP.

Step 304: the first TRP receives the measurement result reported by the target terminal, or obtains the measurement result reported by the target terminal through interaction information between the first TRP and each of the TRPs. the first TRP may determine a virtual cell or a target TRP set serving the target terminal based on the measurement result of the reference signal sent by each of the TRPs to the target terminal, and/or the measurement result of the reference signal sent by the target terminal to each of the TRPs.

Step 305: at least one TRP corresponding to the virtual cell or the at least one TRP in the target TRP set can send a signal to the target terminal.

Optionally, the reference signal sent by the target terminal can carry unique identifier information of the target terminal to facilitate the CU in identifying the target terminal. The signal sent to the target terminal by at least one TRP corresponding to the virtual cell or by at least one TRP in the target TRP set is associated with the unique identifier information.

Optionally, the signal sent by the at least one TRP being associated with the unique identifier information includes one of the followings:
the signal sent by the at least one TRP uses the unique identifier information as a scrambling sequence; or
the scrambling sequence in the signal sent by the at least one TRP is a function of the unique identifier information.

### Embodiment 4

Step 401: a network side device configures a TRP list and/or a corresponding reference signal transmission occasion.

Optionally, the network side device uses a higher-layer signaling to configure information of the TRP list for the target terminal. The information may include: a TRP identifier, a reference signal corresponding to each of the TRPs, and configuration information of at least one of the reference signal transmission occasion corresponding to each of the TRPs.

Step 402: the target terminal sends the reference signal to each of the TRPs in the TRP list based on the TRP list and the corresponding reference signal transmission occasion configured by the network side; and/or measures the reference signal corresponding to each of the TRPs in the TRP list and reports a measurement result to the network side device.

Step 403: each of the TRPs in the TRP list measures the reference signal of the target terminal and feeds back the measurement result to the network side device.

Step 404: the network side device determines a TRP set or a target TRP set included in a virtual cell, such as a quantity and a type of the TRP, based on the measurement result reported by the target terminal and/or the measurement result of the reference signal corresponding to the target terminal reported by each of the TRPs in the TRP list.

Optionally, a data channel or the reference signal of the virtual cell or the target TRP set uses a target terminal identifier or a virtual cell identifier/target TRP set identifier for scrambling, wherein the identifier is fixed, but the TRP set/virtual cell corresponding to the identifier is constantly changing.

### Embodiment 5

Step 501: a target terminal determines a reference signal transmission occasion and a corresponding TRP list based on a preset rule.

Optionally, the target terminal determines the reference signal transmission occasion based on the preset rule. When the target terminal detects a reference signal of a TRP at the reference signal transmission occasion, it includes the TRP in the TRP list.

Step 502: at the reference signal transmission occasion, the target terminal detects the reference signal of the TRP, measures the reference signal, and reports a measurement result to a network side device; and/or, the target terminal transmits the reference signal to each of the TRPs in the TRP list at the reference signal transmission occasion.

Step 503: each of the TRPs in the TRP list measures the reference signal of the target terminal and reports the measurement result to the network side device.

Step 504: the network side device determines the TRP set or target TRP set included in a virtual cell, such as, a quantity and a type of the TRP, based on the measurement result reported by the target terminal and/or the measurement result of the reference signal corresponding to the target terminal reported by each of the TRPs in the TRP list.

Optionally, a data channel or the reference signal of the virtual cell or the target TRP set uses a target terminal identifier or a virtual cell identifier/target TRP set identifier for scrambling, wherein the identifier is fixed, but the TRP set/virtual cell corresponding to the identifier is constantly changing.

### Embodiment 6

Step 601: a target terminal determines a corresponding access channel transmission opportunity based on a preset rule; or the target terminal receives and parses configuration information of the access channel transmission opportunity corresponding to a virtual cell/target TRP set carried by a broadcast message (such as a system message) sent by a network side device, and determines the access channel transmission opportunity based on the configuration information.

Optionally, an access channel is associated with the virtual cell/target TRP set corresponding to the target terminal.

Step 602: the target terminal sends a reference signal corresponding to the target terminal on the access channel transmission opportunity; optionally, the reference signal at least includes the access request sequence corresponding to the target terminal and/or unique identifier information of the target terminal.

Optionally, the target terminal determines the access channel transmission opportunity, which can be determined by the target terminal based on a periodic predetermined pattern; wherein the predetermined pattern is used to indicate resource occupancy of the reference signal.

Step 603: after detecting the reference signal that includes the access request sequence, the network side device allocates the virtual cell/target TRP set to the target terminal requesting access. For example, the virtual cell/target TRP set initiates a data transmission process to a UE through a signal including the unique identifier information.

Embodiment 7: a 6G system has a similar RRC idle/Inactive/Connected mode as in a 4G/5G system.

Step 701: when the target terminal is in an RRC idle/Inactive mode, it detects a cell PCI and receives a broadcast message (such as a paging message and a system message) transmitted by the cell.

Step 702: the broadcast message configures an access resource of a virtual cell/target TRP set for a terminal in the RRC idle mode. For example, the system message configures an access channel transmission opportunity of the virtual cell/target TRP set and/or the PRACH transmission opportunity for initiating access to the current cell for the terminal.

It should be noted that the PRACH transmission opportunity of the cell corresponds to the PCI of the cell, while the access channel transmission opportunity of the virtual cell/target TRP set corresponds to a virtual cell/target TRP set without configuring the PCI.

Step 703: the target terminal can choose to initiate an access process to the virtual cell/target TRP set and/or initiate the access process to the cell receiving the broadcast message:
I) when the target terminal initiates the access process to the virtual cell/target TRP set, that is, receives data transmission of the virtual cell/target TRP set, the data is associated with unique identifier information of the target terminal;
II) when the target terminal initiates the access process to the cell receiving the broadcast message, the target terminal can follow a traditional 4-step or 2-step PRACH access process, and the received data is related to the PCI of the cell.

It should be noted that in the embodiments of the present disclosure, the respective information processing methods at the terminal side and the network device side are corresponding to each other, and the two embodiments can be referred to each other, and a repeated description will be avoided.

The terminal involved in the embodiments of the present disclosure may be a device that provides voice and/or data connectivity to users, a handheld device with a wireless connection function, or other processing devices connected to a wireless modem, etc. In different systems, the names of terminal device may also be different. For example, in a 5G system, the terminal device may be called User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, portable, pocket-sized, handheld, computer-built-in or vehicle-mounted mobile devices, which exchange audio and/or data with a radio access network, and for example, Personal Communication Service (PCS) phones, cordless phones, Session Initiated Protocol (SIP) phones, Wireless Local Loop (WLL) stations, Personal Digital Assistants (PDAs) and other devices. A wireless terminal device may also be called a system, a subscriber unit, a subscriber station, a mobile station, a mobile, a remote station, an access point, a remote terminal, access terminal, a user terminal, a user agent, or a user device, which is not limited in the embodiments of the present disclosure.

The above embodiment introduces the information processing method at the terminal side of the present disclosure. The following embodiments will further describe the corresponding terminal in conjunction with the accompanying drawings.

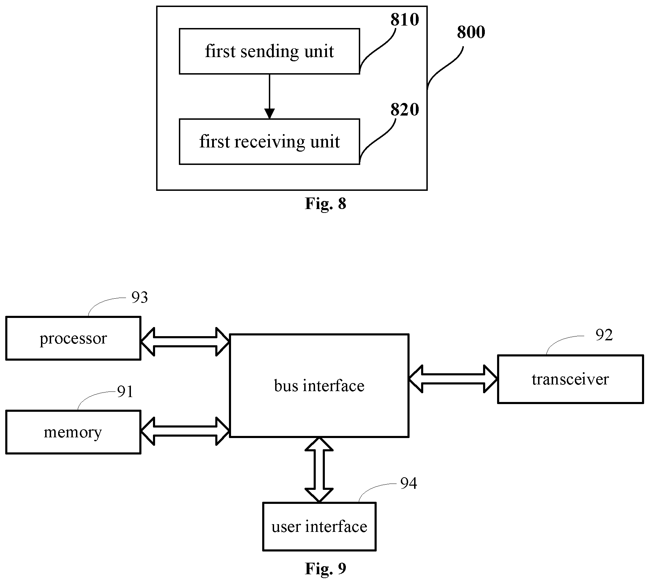

Specifically, as shown in Fig. 8, an embodiment of the present disclosure provides a terminal 800, including:
a first sending unit 810, configured to send first information to network side device;
a first receiving unit 820, configured to receive a signal sent by at least one Transmission Reception Point (TRP) corresponding to a virtual cell serving the terminal or the at least one TRP in a target TRP set serving the terminal; wherein the virtual cell or the target TRP set is determined by the network side device based on the first information.

Optionally, the first sending unit 810 is configured to:
send a reference signal to the network side device, wherein the first information is carried by the reference signal, the first information includes: unique identifier information of the terminal and/or an access request sequence.

Optionally, the reference signal is generated by a unique sequence; the unique sequence is associated with the unique identifier information of the terminal, or the unique sequence is a function of the unique identifier information of the terminal.

Optionally, the information sent by the at least one TRP is associated with the unique identifier information.

Optionally, the information sent by the at least one TRP being associated with the unique identifier information includes one of the followings:
the information sent by the at least one TRP uses the unique identifier information as a scrambling sequence; or
the scrambling sequence in the information sent by the at least one TRP is a function of the unique identifier information.

Optionally, the first sending unit 810 is configured to:
send a reference signal to the TRP in a pre-configured TRP list, and/or detect the reference signal sent by the TRP in the pre-configured TRP list;
measure the reference signal sent by the TRP to obtain a first measurement result;
send the first measurement result to the network side device.

Optionally, the terminal 800 further includes:
a second receiving unit, configured to receive the configuration information of the pre-configured TRP list sent by the network side device; wherein the configuration information includes at least one of the followings: identifier information of each of the TRPs in the pre-configured TRP list, the reference signal corresponding to each of the TRPs, or the reference signal transmission occasion corresponding to each of the TRPs;
a first determination unit, configured to determine the pre-configured TRP list based on the configuration information.

Optionally, the terminal 800 further includes:
a second determination unit, configured to determine the reference signal transmission occasion based on a preset rule;
a processing unit, configured to detect the reference signal sent by the TRP at the reference signal transmission occasion, and record the TRP in the pre-configured TRP list.

Optionally, the second determination unit is further configured to:
determine a reference signal transmission occasion based on a periodic predetermined pattern; wherein the predetermined pattern is used to indicate resource occupancy of the reference signal.

Optionally, the terminal 800 further includes:
a second sending unit, configured to send capability information to the network side device; wherein the capability information includes at least one of the followings:
indication information indicating whether the target terminal supports to configure the virtual cell or the target TRP set;
a message for requesting the virtual cell or the target TRP set;
a message for releasing the virtual cell or the target TRP set;
downlink control channel resource configuration information corresponding to the virtual cell or the target TRP set; or
frequency domain related information corresponding to downlink transmission of the virtual cell or the target TRP set.

Optionally, the terminal 800 further includes:
a third receiving unit, configured to receive first configuration information and/or second configuration information sent by the network side device, wherein the first configuration information is configuration information of an access channel opportunity for the terminal to access the virtual cell or the target TRP set; the second configuration information is configuration information of a physical random access channel opportunity for the terminal to initiate access to a physical cell;
an access unit, configured to initiate an access process of the virtual cell or the target TRP set on the access channel opportunity based on the first configuration information, and/or initiate an access process of the physical cell on the physical random access channel opportunity based on the second configuration information.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the prior art, or the entirety or parts of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage media include: U disk, removable hard disk, Read-Only Memory (ROM), Random Access Memory (RAM), magnetic disk or optical disc and other media that can store program code.

It should be noted here that the above-mentioned terminal provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

As shown in Fig. 9, the embodiment provides a terminal, including a memory 91, a transceiver 92, and a processor 93; wherein the memory 91 is configured to store a computer program; the transceiver 92 is configured to receive and send data under the control of the processor 93; the processor 93 is configured to read the computer program in the memory 91 and perform the following operations:
sending first information to a network side device;
receiving a signal sent by at least one Transmission Reception Point (TRP) corresponding to a virtual cell serving the terminal or the at least one TRP in a target TRP set serving the terminal; wherein the virtual cell or the target TRP set is determined by the network side device based on the first information.

Optionally, the processor 93 is configured to read the computer program in the memory 91 and perform the following operations:
sending a reference signal to the network side device, wherein the first information is carried by the reference signal, the first information includes: unique identifier information of the terminal and/or an access request sequence.

Optionally, the reference signal is generated by a unique sequence; wherein the unique sequence is associated with the unique identifier information of the target terminal, or the unique sequence is a function of the unique identifier information of the target terminal.

Optionally, the information sent by the at least one TRP is associated with the unique identifier information.

Optionally, the information sent by the at least one TRP being associated with the unique identifier information includes one of the followings:
the information sent by the at least one TRP uses the unique identifier information as a scrambling sequence; or
the scrambling sequence in the information sent by the at least one TRP is a function of the unique identifier information.

Optionally, the processor 93 is configured to read the computer program in the memory 91 and perform the following operations:
sending a reference signal to the TRP in a pre-configured TRP list, and/or detecting the reference signal sent by the TRP in the pre-configured TRP list;
measuring the reference signal sent by the TRP to obtain a first measurement result;
sending the first measurement result to the network side device.

Optionally, the processor 93 is configured to read the computer program in the memory 91 and perform the following operations:
receiving configuration information of the pre-configured TRP list sent by the network side device, wherein the configuration information includes at least one of the followings: identifier information of each of the TRPs in the pre-configured TRP list, the reference signal corresponding to each of the TRPs, or a reference signal transmission occasion corresponding to each of the TRPs;
determining the pre-configured TRP list based on the configuration information.

Optionally, the processor 93 is configured to read the computer program in the memory 91 and perform the following operations:
determining a reference signal transmission occasion based on a preset rule;
detecting the reference signal sent by the TRP at the reference signal transmission occasion, and recording the TRP in the pre-configured TRP list.

Optionally, the determining, by the terminal based on the preset rule, the reference signal transmission occasion, including:
determining, by the terminal based on a periodic predetermined pattern, the reference signal transmission occasion; wherein the predetermined pattern is used to indicate resource occupancy of the reference signal.

Optionally, the processor 93 is configured to read the computer program in the memory 91 and perform the following operations:
sending capability information to the network side device, wherein the capability information includes at least one of the followings:
indication information indicating whether the terminal supports to configure the virtual cell or the target TRP set;
a message for requesting the virtual cell or the target TRP set;
a message for releasing the virtual cell or the target TRP set;
downlink control channel resource configuration information corresponding to the virtual cell or the target TRP set; or
frequency domain related information corresponding to downlink transmission of the virtual cell or the target TRP set.

Optionally, the processor 93 is configured to read the computer program in the memory 91 and perform the following operations:
receiving first configuration information and/or second configuration information sent by the network side device, wherein the first configuration information is configuration information of an access channel opportunity for the terminal to access the virtual cell or the target TRP set; the second configuration information is configuration information of a physical random access channel opportunity for the terminal to initiate access to a physical cell;
initiating an access process of the virtual cell or the target TRP set on the access channel opportunity based on the first configuration information, and/or initiating an access process of the physical cell on the physical random access channel opportunity based on the second configuration information.

In Fig. 9, the bus architecture may include any number of interconnected buses and bridges, and connects various circuits including one or more processors represented by the processor 93 and the memory represented by the memory 91. The bus architecture can also link together various other circuits such as peripherals, voltage regulators, and power management circuits, which are all well known in the art and therefore will not be described further herein. The bus interface provides the interface. The transceiver 92 may be a plurality of elements, including a transmitter and a receiver, to allow for communication with various other apparatuses on the transmission medium. The transmission medium includes wireless channels, wired channels, optical cables, and other transmission media. For different UEs, the user interface 94 can also be an interface capable of externally or internally connecting a required device. The connected device includes but is not limited to a keypad, a display, a speaker, a microphone, a joystick, etc.

The processor 93 is responsible for managing the bus architecture and general processing, and the memory 91 can store data used by the processor 93 when performing operations.

Optionally, the processor 93 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory, the processor is configured to perform any of the methods provided by the embodiments of the present disclosure according to the obtained executable instructions. The processor and the memory can also be physically separated.

It should be noted here that the above-mentioned terminal provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

An embodiment of the present disclosure also provides a processor-readable storage medium. The processor-readable storage medium stores a computer program. The computer program is configured to cause the processor to execute the steps in the foregoing information processing method, and can achieve the same technical effect. To avoid redundancy, further details are not repeated here.

The processor-readable storage medium may be any available media or data storage device that the processor can access, including but not limited to magnetic storage (such as floppy disks, hard disks, magnetic tapes, Magneto-Optical disks (MO)), optical storage (such as CD, DVD, BD, HVD), and semiconductor memories (such as ROM, EPROM, EEPROM, non-volatile memory (NAND FLASH), Solid State Disk or Solid State Drive (SSD)), etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) including computer-usable program codes.

The present disclosure has been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process such that the instructions which are executed on the computer or other programmable device provide steps for implementing the functions specified in the flow diagram flow or flows and/or block diagram block or blocks.

In addition, it should be pointed out that in the apparatus and method of the present disclosure, obviously, each component or each step can be decomposed and/or recombined. These decomposition and/or recombination should be considered as equivalents to the present disclosure. Furthermore, the steps for executing the above series of processes can naturally be executed in chronological order in the order described, but they do not necessarily need to be executed in the chronological order, and some steps may be executed in parallel or independently of each other. For those of ordinary skill in the art, it can be understood that all or any steps or components of the methods and apparatuses of the present disclosure can be implemented in any computing device (including processor, storage medium, etc.) or a network of computing devices in the form of hardware, firmware, software or their combination, which can be achieved by those of ordinary skill in the art using their basic programming skills after reading the description of the present disclosure.

It should be understood that the division of each module above is only a division of logical functions. In actual implementation, it can be fully or partially integrated into one physical entity, or it can also be physically separated. These modules can all be implemented in the form of software called by processing elements; they can also all be implemented in the form of hardware; or some modules can be implemented in the form of software called by processing elements, and some modules can be implemented in the form of hardware. For example, a certain module can be a separate processing element, or it can be integrated and implemented in a chip of the above-mentioned device. In addition, it can also be stored in the memory of the above-mentioned apparatus in the form of program codes, and called by a processing element of the above-mentioned apparatus to execute the functions of the modules identified above. The implementation of other modules is similar. In addition, all or part of these modules can be integrated together or implemented independently. The processing element described here may be an integrated circuit with signal processing capabilities. During the implementation process, each step of the above method or each of the above modules can be accomplished by integrated logic circuits in the form of hardware or instructions in the form of software in the processor element.

For example, each module, unit, sub-unit or sub-module may be one or more integrated circuits configured to implement the above method, such as: one or more Application Specific Integrated Circuits (ASICs), or, one or more microprocessors (Digital Signal Processor, DSP), or one or more Field Programmable Gate Arrays (FPGAs). For another example, when one of the above modules is implemented in the form of a processing element calling program codes, the processing element can be a general-purpose processor, such as a Central Processing Unit (CPU) or other processors that can call the program codes. For another example, these modules can be integrated together and implemented in the form of a System-On-A-Chip (SOC).

Terms "first", "second" and the like in the specification and claims of the present disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment. In addition, the use of "and/or" in the specification and claims indicates at least one of the connected objects, for example, A and/or B and/or C indicates the inclusion of 7 situations, namely, A alone, B alone, C alone, both A and B exist, both B and C exist, both A and C exist, and A, B, and C all exist. Similarly, the use of "at least one of A and B" in the specification and claims should be understood to mean "A alone, B alone, or both A and B exist."

Obviously, those skilled in the art can make various changes and modifications to the present disclosure without departing from the spirit and scope of the present disclosure. In this way, if these modifications and variations of the present disclosure fall within the scope of the claims of the present disclosure and equivalent thereof, the present disclosure is also intended to include these modifications and variations.

## Claims

1. An information processing method, comprising:
obtaining, by a network side device, first information;
determining, by the network side device, a virtual cell or a target Transmission Reception Point (TRP) set serving a target terminal based on the first information.

2. The information processing method according to claim 1, wherein the target TRP set is a dedicated TRP set of the target terminal, or the target TRP set is determined by the network side device in a semi-static or dynamic manner;
the virtual cell is determined by the dedicated TRP set of the target terminal; or the virtual cell is determined by a TRP set determined by the network side device in the semi-static or dynamic manner.

3. The information processing method according to claim 1, wherein the obtaining, by the network side device, the first information, comprising:
receiving, by the network side device, a reference signal sent by the target terminal, wherein the first information is carried by the reference signal; the first information comprises: unique identifier information of the target terminal and/or an access request sequence;
the determining, by the network side device, the virtual cell or the target TRP set serving the target terminal based on the first information, comprising:
determining, by the network side device, the virtual cell or the target TRP set serving the target terminal when the network side device detects the access request sequence carried by the reference signal; and/or
determining, by the network side device, the virtual cell or the target TRP set serving the target terminal when the network side device detects the unique identifier information of the target terminal carried by the reference signal.

4. The information processing method according to claim 3, wherein the reference signal is generated by a unique sequence; the unique sequence is associated with the unique identifier information of the target terminal, or the unique sequence is a function of the unique identifier information of the target terminal.

5. The information processing method according to claim 3 or 4, wherein information sent to the target terminal by at least one TRP corresponding to the virtual cell or the at least one TRP in the target TRP set is associated with the unique identifier information.

6. The information processing method according to claim 5, wherein the information sent by the at least one TRP being associated with the unique identifier information comprises one of the followings:
the information sent by the at least one TRP uses the unique identifier information as a scrambling sequence; or
the scrambling sequence in the information sent by the at least one TRP is a function of the unique identifier information.

7. The information processing method according to claim 1, wherein the network side device is a Central Unit (CU); after determining, by the network side device, the virtual cell or the target TRP set serving the target terminal based on the first information, the information processing method further comprising:
notifying, by the CU, at least one TRP corresponding to the virtual cell or the at least one TRP in the target TRP set to send a signal to the target terminal.

8. The information processing method according to claim 7, wherein the obtaining, by the network side device, the first information, comprising:
receiving, by the CU, the first information; wherein the first information comprises: a first measurement result obtained by the target terminal through measuring a reference signal of a TRP in a pre-configured TRP list, and/or a second measurement result obtained by the TRP in the pre-configured TRP list through measuring a reference signal of the target terminal;
the determining, by the network side device, the virtual cell or the target TRP set serving the target terminal based on the first information, comprising:
determining, by the CU, the virtual cell or the target TRP set based on the first information and the pre-configured TRP list.

9. The information processing method according to claim 8, wherein the reference signal of the TRP comprises one of the followings:
a reference signal sent by the TRP, or a reference signal associated with the TRP;
the reference signal of the target terminal comprises one of the followings:
a reference signal sent by the target terminal, or a reference signal associated with the target terminal.

10. The information processing method according to claim 1, wherein the network side device is a first TRP; the obtaining, by the network side device, the first information, comprising:
receiving, by the first TRP, the first information sent by each of the TRPs that belong to a first TRP set and are in a pre-configured TRP list; wherein the first TRP set is determined based on the first TRP, the first information comprises: a first measurement result obtained by the target terminal through measuring a reference signal of a TRP in the pre-configured TRP list, and/or a second measurement result obtained by the TRP in the pre-configured TRP list through measuring a reference signal of the target terminal;
the determining, by the network side device, the virtual cell or the target TRP set serving the target terminal based on the first information, comprising:
determining, by the first TRP, the virtual cell or the target TRP set based on the first information and the pre-configured TRP list.

11. The information processing method according to claim 8 or 10, wherein the pre-configured TRP list is determined by the target terminal based on the reference signal that is sent by the TRP and detected by the target terminal at a reference signal transmission occasion; wherein the reference signal transmission occasion is determined by the target terminal based on a preset rule; or
the information processing method further comprises:
sending, by the network side device, configuration information of the TRP list to the target terminal; wherein the configuration information comprises at least one of the followings: identifier information of each of the TRPs in the TRP list, the reference signal corresponding to each of the TRPs, or the reference signal transmission occasion corresponding to each of the TRPs.

12. The information processing method according to claim 11, wherein the reference signal transmission occasion being determined by the target terminal based on the preset rule comprises:
the reference signal transmission occasion is determined by the target terminal based on a periodic predetermined pattern; wherein the predetermined pattern is used to indicate resource occupancy of the reference signal.

13. The information processing method according to claim 1, further comprising:
receiving, by the network side device, capability information sent by the target terminal;
performing, by the network side device, processing related to the virtual cell or the target TRP set of the target terminal based on the capability information;
wherein the processing related to the virtual cell or the target TRP set of the target terminal comprises at least one of the followings:
a processing for configuring the virtual cell or the target TRP set for the target terminal; or
a processing for releasing the virtual cell or the target TRP set;
wherein the capability information comprises at least one of the followings:
indication information indicating whether the target terminal supports to configure the virtual cell or the target TRP set;
a message for requesting the virtual cell or the target TRP set;
a message for releasing the virtual cell or the target TRP set;
downlink control channel resource configuration information corresponding to the virtual cell or the target TRP set; or
frequency domain related information corresponding to downlink transmission of the virtual cell or the target TRP set.

14. The information processing method according to claim 1, wherein after determining, by the network side device, the virtual cell or the target TRP set serving the target terminal based on the first information, the information processing method further comprises:
sending, by the network side device, first configuration information and/or second configuration information to the target terminal; wherein the first configuration information is configuration information of an access channel opportunity for the target terminal to access the virtual cell or the target TRP set; the second configuration information is configuration information of a physical random access channel opportunity for the target terminal to initiate access to a physical cell.

15. An information processing method, comprising:
sending, by a terminal, first information to a network side device;
receiving, by the terminal, a signal sent by at least one Transmission Reception Point (TRP) corresponding to a virtual cell serving the terminal or the at least one TRP in a target TRP set serving the terminal; wherein the virtual cell or the target TRP set is determined by the network side device based on the first information.

16. The information processing method according to claim 15, wherein the sending, by the terminal, the first information to the network side device, comprising:
sending, by the terminal, a reference signal to the network side device, wherein the first information is carried by the reference signal, the first information comprises: unique identifier information of the terminal and/or an access request sequence.

17. The information processing method according to claim 16, wherein the reference signal is generated by a unique sequence; the unique sequence is associated with the unique identifier information of the terminal, or the unique sequence is a function of the unique identifier information of the terminal.

18. The information processing method according to claim 16 or 17, wherein the information sent by the at least one TRP is associated with the unique identifier information.

19. The information processing method according to claim 18, wherein the information sent by the at least one TRP being associated with the unique identifier information comprises one of the followings:
the information sent by the at least one TRP uses the unique identifier information as a scrambling sequence; or
the scrambling sequence in the information sent by the at least one TRP is a function of the unique identifier information.

20. The information processing method according to claim 15, wherein the sending, by the terminal, the first information to the network side device, comprising:
sending, by the terminal, a reference signal to the TRP in a pre-configured TRP list, and/or detecting, by the terminal, the reference signal sent by the TRP in the pre-configured TRP list;
measuring, by the terminal, the reference signal sent by the TRP to obtain a first measurement result;
sending, by the terminal, the first measurement result to the network side device.

21. The information processing method according to claim 20, wherein before sending, by the terminal, the first information to the network side device, the information processing method further comprises:
receiving, by the terminal, configuration information of the pre-configured TRP list sent by the network side device, wherein the configuration information comprises at least one of the followings: identifier information of each of the TRPs in the pre-configured TRP list, the reference signal corresponding to each of the TRPs, or a reference signal transmission occasion corresponding to each of the TRPs;
determining, by the terminal based on the configuration information, the pre-configured TRP list.

22. The information processing method according to claim 20, wherein before sending, by the terminal, the first information to the network side device, the information processing method further comprises:
determining, by the terminal based on a preset rule, a reference signal transmission occasion;
detecting, by the terminal at the reference signal transmission occasion, the reference signal sent by the TRP, and recording, by the terminal, the TRP in the pre-configured TRP list.

23. The information processing method according to claim 22, wherein the determining, by the terminal based on the preset rule, the reference signal transmission occasion, comprising:
determining, by the terminal based on a periodic predetermined pattern, the reference signal transmission occasion; wherein the predetermined pattern is used to indicate resource occupancy of the reference signal.

24. The information processing method according to claim 15, further comprising:
sending, by the terminal, capability information to the network side device, wherein the capability information comprises at least one of the followings:
indication information indicating whether the terminal supports to configure the virtual cell or the target TRP set;
a message for requesting the virtual cell or the target TRP set;
a message for releasing the virtual cell or the target TRP set;
downlink control channel resource configuration information corresponding to the virtual cell or the target TRP set; or
frequency domain related information corresponding to downlink transmission of the virtual cell or the target TRP set.

25. The information processing method according to claim 15, wherein before receiving, by the terminal, the signal sent by the at least one Transmission Reception Point (TRP) corresponding to the virtual cell serving the terminal or the at least one TRP in the target TRP set serving the terminal, the information processing method further comprises:
receiving, by the terminal, first configuration information and/or second configuration information sent by the network side device, wherein the first configuration information is configuration information of an access channel opportunity for the terminal to access the virtual cell or the target TRP set; the second configuration information is configuration information of a physical random access channel opportunity for the terminal to initiate access to a physical cell;
initiating, by the terminal based on the first configuration information, an access process of the virtual cell or the target TRP set on the access channel opportunity, and/or initiating, by the terminal based on the second configuration information, an access process of the physical cell on the physical random access channel opportunity.

26. A network side device, comprising: a transceiver, a memory, a processor, and a computer program stored in the memory and used to be executed by the processor, wherein the processor is configured to execute the computer program to implement the following steps:
obtaining first information;
determining a virtual cell or a target Transmission Reception Point (TRP) set serving a target terminal based on the first information.

27. The network side device according to claim 26, wherein the processor, when executing the computer program, implements the following steps:
receiving a reference signal sent by the target terminal, wherein the reference signal carries the first information; the first information comprises: unique identifier information of the target terminal and/or an access request sequence;
determining the virtual cell or the target TRP set serving the target terminal when the processor detects the access request sequence carried by the reference signal; and/or
determining the virtual cell or the target TRP set serving the target terminal when the processor detects the unique identifier information of the target terminal carried by the reference signal.

28. The network side device according to claim 26, wherein the network side device is a Central Unit (CU); the processor, when executing the computer program, implements the following steps:
notifying at least one TRP corresponding to the virtual cell or the at least one TRP in the target TRP set to send a signal to the target terminal.

29. The network side device according to claim 28, wherein the processor, when executing the computer program, implements the following steps:
receiving the first information; wherein the first information comprises: a first measurement result obtained by the target terminal through measuring a reference signal of a TRP in a pre-configured TRP list, and/or a second measurement result obtained by the TRP in the pre-configured TRP list through measuring a reference signal of the target terminal;
determining the virtual cell or the target TRP set based on the first information and the pre-configured TRP list.

30. The information processing method according to claim 29, wherein the reference signal of the TRP comprises one of the followings:
a reference signal sent by the TRP, or a reference signal associated with the TRP;
the reference signal of the target terminal comprises one of the followings:
a reference signal sent by the target terminal, or a reference signal associated with the target terminal.

31. The network side device according to claim 26, wherein the processor, when executing the computer program, implements the following steps:
receiving the first information sent by each of the TRPs that belong to a first TRP set and are in a pre-configured TRP list; wherein the first TRP set is determined based on the first TRP, the first information comprises: a first measurement result obtained by the target terminal through measuring a reference signal of each of the TRPs in the pre-configured TRP list, and/or a second measurement result obtained by the TRP in the pre-configured TRP list through measuring a reference signal of the target terminal;
determining the virtual cell or the target TRP set based on the first information and the pre-configured TRP list.

32. The network side device according to claim 29 or 31, wherein the pre-configured TRP list is determined by the target terminal based on the reference signal that is sent by the TRP and detected by the target terminal at a reference signal transmission occasion; wherein the reference signal transmission occasion is determined by the target terminal based on a preset rule; or
the processor, when executing the computer program, implements the following steps:
sending configuration information of the pre-configured TRP list to the target terminal; wherein the configuration information comprises at least one of the followings: identifier information of each of the TRPs in the pre-configured TRP list, the reference signal corresponding to each of the TRPs, or the reference signal transmission occasion corresponding to each of the TRPs.

33. The network side device according to claim 26, wherein the processor, when executing the computer program, implements the following steps:
sending first configuration information and/or second configuration information to the target terminal; wherein the first configuration information is configuration information of an access channel opportunity for the target terminal to access the virtual cell or the target TRP set; the second configuration information is configuration information of a physical random access channel opportunity for the target terminal to initiate access to a physical cell.

34. A network side device, comprising:
an obtaining unit, configured to obtain first information;
a processing unit, configured to determine a virtual cell or a target Transmission Reception Point (TRP) set serving a target terminal based on the first information.

35. A terminal, comprising: a transceiver, a memory, a processor, and a computer program stored in the memory and used to be executed by the processor, wherein the processor, when executing the computer program, implements the following steps:
sending first information to a network side device;
receiving a signal sent by at least one Transmission Reception Point (TRP) corresponding to a virtual cell serving the terminal or the at least one TRP in a target TRP set serving the terminal; wherein the virtual cell or the target TRP set is determined by the network side device based on the first information.

36. The terminal according to claim 35, wherein the processor, when executing the computer program, implements the following steps:
sending a reference signal to the network side device, wherein the first information is carried by the reference signal, the first information comprises: unique identifier information of the terminal and/or an access request sequence.

37. The terminal according to claim 35, wherein the processor, when executing the computer program, implements the following steps:
sending a reference signal to the TRP in a pre-configured TRP list, and/or detecting the reference signal sent by the TRP in the pre-configured TRP list;
measuring the reference signal sent by the TRP to obtain a first measurement result;
sending the first measurement result to the network side device.

38. The terminal according to claim 37, wherein the processor, when executing the computer program, implements the following steps:
receiving configuration information of the pre-configured TRP list sent by the network side device, wherein the configuration information comprises at least one of the followings: identifier information of each of the TRPs in the pre-configured TRP list, the reference signal corresponding to each of the TRPs, or a reference signal transmission occasion corresponding to each of the TRPs;
determining the pre-configured TRP list based on the configuration information.

39. The terminal according to claim 37, wherein the processor, when executing the computer program, implements the following steps:
determining a reference signal transmission occasion based on a preset rule;
detecting the reference signal sent by the TRP at the reference signal transmission occasion, and recording the TRP in the pre-configured TRP list.

40. The terminal according to claim 35, wherein the processor, when executing the computer program, implements the following steps:
receiving first configuration information and/or second configuration information sent by the network side device, wherein the first configuration information is configuration information of an access channel opportunity for the terminal to access the virtual cell or the target TRP set; the second configuration information is configuration information of a physical random access channel opportunity for the terminal to initiate access to a physical cell;
initiating an access process of the virtual cell or target TRP set on the access channel opportunity based on the first configuration information, and/or initiating an access process of the physical cell on the physical random access channel opportunity based on the second configuration information.

41. A terminal, comprising:
a first sending unit, configured to send first information to network side device;
a first receiving unit, configured to receive a signal sent by at least one Transmission Reception Point (TRP) corresponding to a virtual cell serving the terminal or the at least one TRP in a target TRP set serving the terminal; wherein the virtual cell or the target TRP set is determined by the network side device based on the first information.

42. A computer-readable storage medium storing a computer program, wherein the computer program, when executed by a processor, implements the steps of the information processing method according to any one of claims 1 to 14, or the steps of the information processing method according to any one of claims 15 to 25.
